# FASCICULE DE BREVET EUROPEEN

(11) **EP 2 326 482 B1**
(45) Date de publication et mention de la délivrance du brevet: **23.11.2011**
(21) Numéro de dépôt: 09740413.1
(22) Date de dépôt: 30.07.2009
(51) Int. Cl.: B29C 49/64, B29C 35/16

(54) **Procédé et installation pour appliquer un fluide sur des fonds de recipients thermoplastiques, notamment pour le refroidissement des fonds chauds de recipients sortant de moulage**
Verfahren und Vorrichtung zum Zuführen eines Fluids zu den Endwänden von thermoplastischen Behältern, insbesondere zum Kühlen der heissen Endwände von eine Formeinheit verlassenden Behältern
Method and device for applying a fluid to end walls of thermoplastic containers, especially for cooling the hot end walls of containers leaving a moulding unit

(30) Priorité: 31.07.2008 FR 0855282
(43) Date de publication de la demande: 01.06.2011
(73) Titulaire: Sidel Participations, 76930 Octeville sur Mer (FR)
(72) Inventeur: DERRIEN, Mikaël, F-76930 Octeville-sur-Mer (FR); FEUILLOLEY, Guy, F-76930 Octeville-sur-Mer (FR); PERNEL, Yann, F-76930 Octeville-sur-Mer (FR)
(74) Mandataire: Cabinet Plasseraud
(86) Numéro de dépôt international: PCT/FR2009/051530
(87) Numéro de publication internationale: WO 2010/012957

(56) Documents cités:
- GB-A- 1 375 041
- US-A- 3 668 288
- US-A- 3 923 936

## Description

La présente invention concerne, d'une façon générale, le domaine de la fabrication des récipients en matière thermoplastique, telle que le PET, par soufflage ou étirage-soufflage de préformes chaudes dans des moules. L'invention concerne plus particulièrement l'application d'un fluide sur les fonds de récipients en matière thermoplastique, notamment, bien que non exclusivement, en vue du refroidissement des fonds chauds de récipients thermoplastiques qui sortent d'un moule de soufflage ou d'étirage-soufflage.

Le fond est la partie des récipients en matière thermoplastique qui est la plus délicate à traiter et qui nécessite le plus d'attention au cours du processus de fabrication.

Par ailleurs, le fond est la partie des récipients qui possède, au moins en partie, l'épaisseur la plus importante (typiquement l'épaisseur du fond, au moins localement, peut être comprise entre le minimum et vingt fois l'épaisseur de la paroi du corps du récipient). Par conséquent, le fond accumule, lors de l'étape de chauffage menée en préalable à l'étape de moulage, une grande quantité de chaleur qui est toujours notablement présente au moment où le récipient achevé est extrait du moule.

Or le fond chaud est mécaniquement très fragile, car la matière thermoplastique encore très chaude peut se déformer ne serait-ce que sous l'action de son propre poids et/ou les contraintes résiduelles liées au procédé de soufflage. Or le respect d'une forme parfaite du fond du récipient garantit la stabilité du récipient posé sur un support plan, et toute déformation du fond compromet cette stabilité et rend le récipient non exploitable commercialement.

Il est donc d'une grande importance que la matière constitutive du fond soit refroidie le plus rapidement possible dès la sortie du récipient achevé hors du moule de manière à figer la forme requise conférée par le moule, et de toute façon il est souhaitable que la forme du fond soit parfaitement figée, et donc la température abaissée, lorsque le récipient atteint le poste de traitement suivant.

Jusqu'à présent, le refroidissement des fonds des récipients sortant de moulage pouvait être obtenu par refroidissement naturel dans l'atmosphère ambiante sur le trajet menant au poste suivant (par exemple une remplisseuse) lorsque ce trajet était d'une durée suffisante (par exemple quelques dizaines de secondes).

Dans certaines installations, on a aussi pu mettre en oeuvre la projection d'un fluide gazeux (en général de l'air) ou d'un liquide (en général de l'eau) pulvérisé sous forme d'un brouillard, éventuellement refroidi, sur les fonds des récipients en cours de défilement à la sortie de l'installation de moulage afin d'accélérer le refroidissement des fonds. Toutefois, ce genre d'aménagement complique la conception structurelle des installations déjà fortement encombrées par ailleurs et en accroît les coûts de fabrication et d'entretien. En outre, les jets de fluide de refroidissement peuvent générer une pollution (apparition de germes, ...) tant de l'installation de soufflage que des récipients finaux, ainsi que des perturbations dans des parties voisines de l'installation. De ce fait, on cherche en pratique à éviter de tels aménagements.

Enfin et surtout, les exploitants d'installations de fabrication de récipients thermoplastiques requièrent des vitesses de fonctionnement toujours accrues, et des vitesses de l'ordre de 80 000 récipients/heure sont actuellement envisagées. De plus, la recherche d'installations toujours plus compactes par souci d'économie de surface d'implantation conduit à rapprocher les divers postes de traitement, par exemple entre l'installation de soufflage et l'installation de remplissage qui lui succède. Il en résulte au total un raccourcissement considérable des temps de transit des récipients (par exemple, le temps de transfert des récipients entre l'installation de soufflage et l'installation de remplissage pourrait devenir de l'ordre d'un petit nombre de secondes). Il n'est plus possible, dans de telles conditions, que les fonds des récipients sortant de moulage puissent être refroidis dans les conditions pratiquées jusqu'à présent.

Indépendamment de ce qui vient d'être exposé en relation avec le refroidissement des fonds chauds de récipients thermoplastiques sortant de moulage et qui est d'ordre général dans le contexte de la fabrication des récipients thermoplastiques, il peut aussi être requis, pour certaines productions, l'application d'un produit sous forme fluide, notamment liquide, sur le fond de récipients thermoplastiques non pas pour en abaisser la température comme exposé plus haut, mais au contraire pour en relever la température ou encore pour amener une modification de l'état de surface du fond des récipients. Dans certains cas au moins, une modification de l'état de surface du fond des récipients peut être obvenue par l'application d'un fluide, notamment d'un liquide, approprié sur la face externe dudit fond (par exemple : dépôt d'une couche protectrice contre notamment des agressions chimiques ; coloration de la face externe des fonds notamment à des fins décoratives ; etc.).

On connaît du document GB 1 375 041 une installation permettant la fabrication de récipients par moulage, l'installation comprenant trois postes principaux. Dans le premier poste, les récipients sont moulés dans des cavités qui sont ménagées dans une roue entraînée en rotation. A l'extérieur de cette roue, au voisinage de sa périphérie, se trouvent des moyens permettant un refroidissement des récipients se trouvant dans les cavités. Ces moyens de refroidissement comportent un rouleau entraîné en rotation, sur lequel est fixée une masse spongieuse qui trempe dans un récipient de liquide de refroidissement.

De tels moyens de refroidissement peuvent entraîner des déformations sur les récipients.

L'invention a pour objet de proposer des moyens (procédé et installation) permettant d'appliquer un fluide sur des fonds de récipients en particulier mais non exclusivement en vue de refroidir de façon rapide les fonds de récipients sortant de moulage, tout en préservant leur forme ou leur état de surface et cela dans des conditions de coût et d'encombrement acceptables dans des installations à très grande cadence de production et dans des conditions techniques qui n'entraînent aucune modification ou perturbation dans les processus menés en amont et en aval.

A ces fins, selon un premier de ses aspects, l'invention propose un procédé pour appliquer un fluide sur le fond d'au moins un récipient en matière thermoplastique, selon la revendication 1.

Le procédé selon l'invention est remarquable en ce que la masse spongieuse est entraînée en déplacement à la même vitesse que le récipient sur une trajectoire sensiblement parallèle à celle du récipient en même temps qu'elle est appliquée au contact du fond du récipient pendant ladite durée prédéterminée.

Le procédé selon l'invention assure ainsi un synchronisme dans le mouvement de la masse spongieuse et celui du fond du récipient, ce qui offre l'avantage d'obtenir une immobilité de la masse spongieuse par rapport à la surface à refroidir. La surface à refroidir n'est ainsi pas abîmée par un mouvement de la masse spongieuse appliquée sur elle.

Dans un mode de réalisation capable de traiter un grand nombre de récipients défilant les uns à la suite des autres selon ladite trajectoire prédéterminée qui est sensiblement rectiligne, on prévoit
de constituer la masse spongieuse sous forme d'un ruban sans fin comportant au moins un brin qui s'étend sensiblement parallèlement à ladite trajectoire prédéterminée des récipients et qui est mis en rotation en synchronisme avec la vitesse de déplacement des récipients les uns à la suite des autres,
de déplacer les récipients de manière que leurs fonds respectifs soient mis en contact avec ledit brin du ruban sans fin formé par la masse spongieuse, et
d'imprégner le ruban sans fin formé par la masse spongieuse, alors qu'il quitte le contact des fonds de récipients, à nouveau avec du fluide frais.

Par le terme « fluide frais », on entend désigner un fluide qui possède ses caractéristiques originelles requises soit parce qu'il n'a pas encore travaillé (par exemple il vient d'être alimenté), soit parce qu'après avoir déjà travaillé il est recyclé de toute manière appropriée afin de récupérer ses caractéristiques originelles.

Dans un autre mode de réalisation, préféré, qui est capable de traiter un grand nombre de récipients défilant les uns à la suite des autres selon ladite trajectoire prédéterminée qui est sensiblement en arc de cercle de rayon prédéterminé, et qui en outre est relativement compact de sorte qu'il est apte à être mis en place aisément dans une installation de traitement de récipients :
on prévoit une pluralité de masses spongieuses situées sous lesdits récipients et défilant les unes à la suite des autres selon une trajectoire sensiblement circulaire qui possède un rayon sensiblement égal audit rayon prédéterminé et qui s'étend sensiblement parallèlement et
sensiblement coaxialement à ladite trajectoire prédéterminée des récipients, lesdites masses spongieuses étant déplacées en rotation en synchronisme avec lesdits récipients sous les fonds respectifs de ceux-ci,
lorsque les récipients parviennent en début de la trajectoire prédéterminée, on rapproche mutuellement les récipients et les masses spongieuses respectives de manière que les fonds soient mis en contact avec les masses spongieuses respectives,
lorsque les récipients parviennent en fin de la trajectoire prédéterminée, on écarte mutuellement les récipients et les masses spongieuses respectives, et après avoir quitté le contact des fonds de récipients, les masses spongieuses sont rechargées en fluide frais,
ladite recharge en fluide frais intervenant sur le parcours angulaire des masses spongieuses compris entre la fin du parcours des récipients sur la trajectoire prédéterminée et le début du parcours des récipients sur la trajectoire prédéterminée.

Si besoin en est, on peut avantageusement prévoir de réguler au moins une caractéristique, notamment la température, du fluide frais.

Pour améliorer l'efficacité du procédé grâce à une recharge de la masse spongieuse avec une quantité maximale de produit frais, on peut faire en sorte que le fluide soit un liquide et que, après avoir été mise hors de contact avec le fond du récipient, la masse spongieuse soit essorée et à nouveau imbibée de liquide frais avant d'être remise en contact avec un fond d'un autre récipient.

Dans un but d'économiser les produits utilisés et d'éviter, ou au moins de réduire, la pollution de l'installation alors que le fluide est un liquide, il est souhaitable de récupérer le liquide s'échappant lors de l'appui de la ou des masses spongieuses contre les fonds des récipients et lors de l'essorage et de prévoir que le liquide récupéré soit, après traitement éventuel, ramené à la réserve de liquide frais.

De façon avantageuse, pour accélérer la disponibilité des récipients par exemple en vue de leur remplissage immédiatement en aval, il est souhaitable qu'après l'application du fluide sur le fond du récipient et l'éloignement de ladite masse spongieuse dudit fond, on sèche au moins en partie la surface dudit fond.

Les moyens proposés par l'invention permettent d'effectuer un traitement des fonds des récipients par apport d'un fluide, notamment d'un liquide, sur lesdits fonds dans des conditions compatibles avec cadences élevées actuellement requises par les fabricants et/ou conditionneurs. Ainsi, il peut être envisagé de modifier rapidement la température du fond d'au moins un récipient en matière thermoplastique, en prévoyant à cette fin que ladite masse spongieuse amenée au contact du fond dudit au moins un récipient soit imbibée d'un fluide, notamment d'un liquide, caloporteur que l'on maintient au contact dudit fond pendant une durée prédéterminée.

Cet aspect du procédé conforme à l'invention semble devoir trouver une application particulièrement intéressante pour refroidir rapidement le fond chaud d'au moins un récipient en matière thermoplastique qui sort d'un moule de soufflage ou d'étirage-soufflage, lequel procédé se caractérise alors en ce que ladite masse spongieuse amenée au contact du fond dudit au moins un récipient est imprégnée d'un fluide, notamment liquide, caloporteur à une température inférieure à celle des fonds (liquide de refroidissement) que l'on maintient au contact dudit fond pendant une durée prédéterminée, lequel fluide peut être couramment un liquide tel que de l'eau, éventuellement additionnée d'un produit spécifique notamment propre à réduire sa tension superficielle afin d'accélérer l'évaporation. Il devient ainsi possible d'assurer un refroidissement rapide et efficace des fonds des récipients, et donc de figer rapidement la forme desdits fonds, grâce à la possibilité d'un apport de fluide de refroidissement en une quantité qu'il n'était pas possible d'obtenir avec les moyens actuellement utilisés (soufflage de gaz ou pulvérisation d'un liquide), avec cet avantage supplémentaire très important d'une possibilité de mise en oeuvre industrielle dans des installations de fabrication de récipients à cadence élevée.

Selon un second de ses aspects, l'invention propose également une installation pour appliquer un fluide sur le fond d'au moins un récipient en matière thermoplastique, pour la mise en oeuvre du procédé qui vient d'être exposé, selon la revendication 10.

Conformément à l'invention, l'installation comporte des moyens d'entraînement fonctionnellement associés auxdits moyens de support pour que ceux-ci soient déplacés en synchronisme avec les moyens transporteurs de manière que ladite au moins une masse spongieuse reste en contact avec le fond d'un récipient, la longueur de ladite trajectoire prédéterminée et/ou la vitesse de déplacement des récipients et de la masse spongieuse étant établies pour procurer la susdite durée déterminée de maintien en contact de la masse spongieuse avec le fond du récipient.

Dans un mode de réalisation possible d'une telle installation propre à autoriser le traitement d'un grand nombre de récipients en défilement rapide, on prévoit
que le fluide est un liquide,
que les moyens de renouvellement du liquide comprennent un réservoir rempli de liquide frais,
que les moyens transporteurs sont mobiles selon une trajectoire prédéterminée sensiblement linéaire,
que la masse spongieuse est conformée sous forme d'un ruban sans fin comportant au moins un brin
qui est allongé et s'étend sensiblement rectilinéairement et sensiblement parallèlement à la trajectoire parcourue par les fonds des récipients déplacés par les moyens transporteurs et
qui est positionné verticalement de manière que les fonds des récipients s'impriment dans la masse spongieuse imbibée de liquide, et
que ledit ruban sans fin comporte une partie, distincte du susdit brin, conformée pour défiler dans ledit réservoir rempli de liquide frais.

Dans un autre mode de réalisation, qui est actuellement préféré du fait que non seulement il est compatible avec les impératifs d'une production industrielle en masse, mais qu'il est également plus compact et plus facile à mettre en place, on prévoit que les moyens transporteurs des récipients soient mobiles sensiblement circulairement et déplacent les récipients selon une trajectoire prédéterminée sensiblement en arc de cercle entre une entrée et une sortie des récipients, et que l'installation comporte
- une pluralité de masses spongieuses supportées les unes à la suite des autres,
- une pluralité de supports des masses spongieuses respectivement disposés sensiblement circulairement et entraînés en rotation sur une trajectoire circulaire sensiblement parallèle et coaxiale à la trajectoire parcourue par les fonds des récipients,
- des moyens d'entraînement propres à déplacer mutuellement lesdits moyens transporteurs des récipients et/ou lesdits moyens de support des masses spongieuses de manière que les fonds des récipients soient mis en contact avec les masses spongieuses respectives sur au moins une partie de la susdite trajectoire prédéterminée en arc de cercle parcourue par les récipients, et
- des moyens de rechargement des masses spongieuses en fluide disposés dans la partie de ladite trajectoire circulaire située entre la sortie et l'entrée des récipients sur ladite trajectoire prédéterminée.

Dans une telle installation, on peut faire en sorte que lesdits moyens d'entraînement soient propres à commander un déplacement sensiblement vertical des récipients pour les abaisser en aval de ladite entrée afin d'amener leurs fonds respectifs au contact des masses spongieuses respectives et pour les élever en amont de ladite sortie pour écarter leurs fonds respectifs des masses spongieuses respectives. Ou bien, en variante, il est également envisageable que lesdits moyens d'entraînement soient propres à commander un déplacement sensiblement vertical des masses spongieuses pour les élever en aval de ladite entrée afin de les amener au contact des fonds des récipients respectifs et pour les abaisser en amont de ladite sortie pour les écarter des fonds des récipients respectifs.

Dans un exemple pratique de réalisation, il est avantageux, pour économiser le produit, que l'installation comporte une goulotte sensiblement annulaire disposée sous la trajectoire des masses spongieuses pour récupérer les écoulements liquides susceptibles de dégoutter des masses spongieuses.

Pour accroître l'efficacité de fonctionnement de l'installation conforme à l'invention, il est souhaitable que la masse spongieuse puisse être rechargée avec une quantité maximale de fluide frais. A cet effet, il est intéressant que, le fluide étant un liquide, l'installation comporte des moyens d'essorage propres à essorer la masse spongieuse après sa séparation d'avec le fond du récipient et que les moyens de renouvellement du liquide soient disposés en aval desdits moyens d'essorage, pour recharger la masse spongieuse en liquide frais. Dans un exemple de réalisation, lesdits moyens d'essorage des masses spongieuses peuvent comprendre au moins un rouleau contre lequel les masses spongieuses en défilement sont écrasées. Dans un autre exemple pratique de réalisation qui actuellement est préféré, les moyens de rechargement de la masse spongieuse en fluide frais peuvent comprendre au moins une rampe de projection de jets de fluide frais sur les masses spongieuses.

Enfin, si cela est nécessaire et/ou intéressant, l'installation peut comporter divers aménagements additionnels propres à en améliorer ou faciliter le fonctionnement. Par exemple, l'installation peut comporter des moyens de régulation de la température et/ou de régénération du fluide frais.

Une installation conforme à l'invention peut notamment trouver application, bien que non exclusivement, pour modifier rapidement la température du fond d'au moins un récipient en matière thermoplastique, ledit fluide étant alors un fluide caloporteur. En particulier, une telle installation semble devoir trouver une application particulièrement intéressante pour refroidir rapidement le fond chaud d'au moins un récipient en matière thermoplastique qui sort d'un moule de soufflage ou d'étirage-soufflage, le fluide dont ladite au moins une masse spongieuse est imprégnée étant un fluide caloporteur à température inférieure à celle de la matière thermoplastique constitutive dudit fond.

L'invention sera mieux comprise à la lecture de la description détaillée qui suit de certains modes de réalisation donnés uniquement à titre d'exemples nullement limitatifs. Dans cette description, on se réfère aux dessins annexés sur lesquels :
- les figures 1A, 1B et 1C sont des vues de côté très schématiques illustrant les points essentiels du procédé conforme à l'invention respectivement dans trois variantes possibles de mise en oeuvre;
- les figures 1D, 1E et 1F sont des vues très schématiques analogues respectivement aux figures 1A, 1B et 1C ;
- la figure 2 est une représentation schématique, vue de côté, d'un mode de réalisation possible d'une installation mettant en oeuvre de façon industrielle le procédé de l'invention ;
- la figure 3 est une représentation schématique, vue de côté, d'un autre mode de réalisation possible d'une installation mettant en oeuvre de façon industrielle le procédé de l'invention ;
- les figures 4A et 4B sont des représentations schématiques, respectivement en coupe diamétrale et en vue de dessus, d'un mode de réalisation préféré d'une installation tournante agencée conformément à l'invention ;
- la figure 4C est une représentation de l'installation montrée à la figure 4A dans une autre position fonctionnelle ;
- la figure 5 est une demi-vue en coupe diamétrale de l'installation selon la ligne V-V de la figure 4A, montrant un détail de réalisation ; et
- la figure 6 est une représentation schématique en coupe diamétrale d'un autre mode de réalisation préféré d'une installation tournante agencée conformément à l'invention.

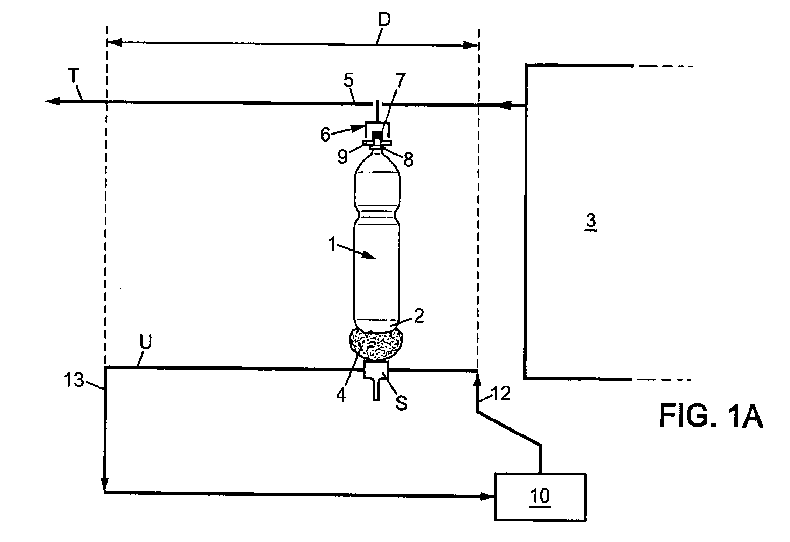

En se reportant tout d'abord à la figure 1A, il y est illustré très schématiquement un procédé pour appliquer un fluide sur le fond 2 d'au moins un récipient 1, notamment d'une bouteille, en matière thermoplastique, telle que du PET. Conformément à l'invention, on amène au contact du fond 2 dudit au moins un récipient 1 une masse 4 spongieuse imprégnée dudit fluide et on maintient, grâce à un support S approprié, ladite masse 4 spongieuse imprégnée dudit fluide au contact du fond 2 pendant une durée prédéterminée. Dans une mise en oeuvre industrielle du procédé de l'invention, le récipient 1 est entraîné en déplacement sur une trajectoire T prédéterminée (schématisée par la flèche T), en étant pris en charge par des moyens transporteurs, schématisés en 5 à la figure 1A ; on a supposé, dans la représentation de la figure 1A que le récipient 1 était supporté par un organe 6 à pinces comportant des pinces 9 engagées autour du col 7 du récipient 1, au-dessus d'une collerette 8, entre celle-ci et un filetage de fixation d'un bouchon placé au niveau dudit col 7, et que ledit organe 6 à pinces est lui-même supporté par les moyens 5 transporteurs. Pour simplifier la représentation et bien que cela ne soit pas techniquement lié à l'invention, le procédé de l'invention est illustré à la figure 1A comme étant mis en oeuvre dans une partie sensiblement rectilinéaire de la trajectoire T.

De son côté, la masse 4 spongieuse est entraînée en déplacement sensiblement à la même vitesse que le récipient 1 sur une trajectoire U (schématisée par la flèche U) de longueur D limitée, sensiblement parallèle à celle T du récipient 1, en même temps qu'elle est appliquée au contact du fond 2 du récipient 1 pendant ladite durée prédéterminée.

Il faut souligner que l'application de la masse 4 spongieuse contre le fond 2 du récipient 1 se traduit par un effort de poussée exercé contre le fond 2 du récipient sensiblement selon l'axe de celui-ci, c'est-à-dire sensiblement verticalement du bas vers le haut dans la configuration, montrée à la figure 1A, de récipients transportés en position sensiblement verticale col en haut. Il en résulte que, malgré la présence de la collerette 8, il est nécessaire que l'organe 6 à pinces enserre le col 7 du récipient 1 de façon positive afin de bloquer le récipient verticalement.

Dans la représentation schématique qui est donnée à la figure 1A, on a supposé que la masse 4 spongieuse était imprégnée au moins partiellement de fluide frais ayant les caractéristiques souhaitées en un emplacement (par exemple dans une enceinte) 10 (schématisé sur la figure 1A sous forme d'un bloc). Une fois imprégnée de fluide frais de toute manière appropriée dont des exemples seront donnés plus loin, la masse 4 spongieuse et le fond 2 du récipient 1 sont amenés en contact mutuel au moment où ils se présentent à l'aplomb l'un de l'autre : dans cet exemple, la masse 4 spongieuse est soulevée hors depuis l'emplacement 10 (flèche 12), puis appliquée contre le fond 2 du récipient 1 au moment où celui-ci se présente à son aplomb.

La masse 4 spongieuse accompagne alors ledit fond 2 tout au long du déplacement du récipient 1 sur une portion D donnée de ladite trajectoire T correspondant, en relation avec la vitesse de déplacement du récipient 1, avec un temps de contact prédéterminé devant conduire à l'obtention de l'effet recherché sur ledit fond. Au terme de ladite portion donnée de la trajectoire T, la masse spongieuse est écartée du fond 2 (flèche 13), tandis que le récipient 1 entraîné par les moyens 5 transporteurs poursuit sa course. La masse 4 spongieuse, dans laquelle le fluide peut avoir disparu au moins en partie (par exemple présence ou apparition d'une phase liquide qui a dégouttée) et peut avoir éventuellement perdu tout ou partie de ses caractéristiques au contact du fond 2, peut ensuite être ramenée à son point de départ vers l'emplacement 10 où elle est à nouveau rechargée en fluide frais, en attendant l'arrivée d'un autre récipient 1.

On remarquera que, dans l'exemple illustré à la figure 1A, les moyens 5 transporteurs sont représentés comme déplaçant les récipients 1 selon une trajectoire T à niveau sensiblement constant, tandis que c'est la masse 4 spongieuse qui est soulevée pour être amenée contre le fond 2 des récipients 1 successifs. En outre, les récipients sont supposés être de relativement grande hauteur (par exemple bouteilles de 1,5 ou 2 litres, pour fixer les idées).

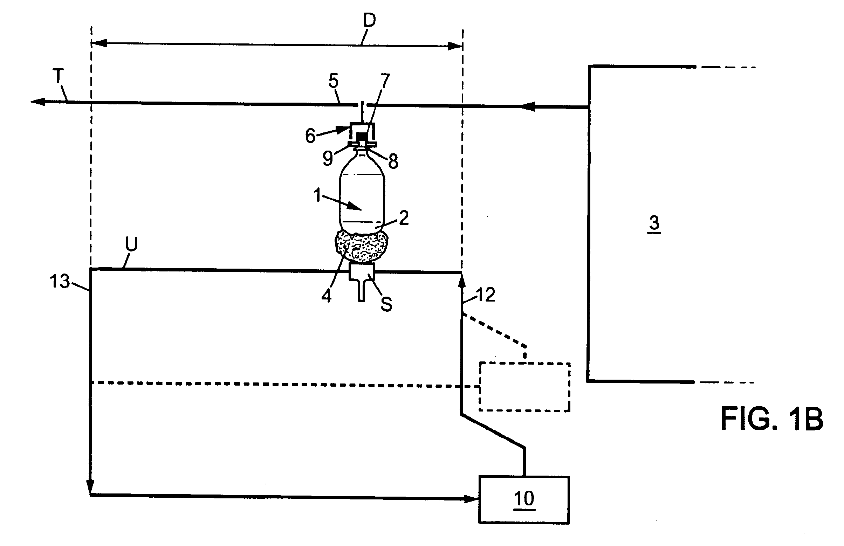

A la figure 1B, on a représenté la même installation traitant des récipients 1 de moindre hauteur (par exemple 0,5 litre, pour fixer les idées), ce qui nécessite de prévoir un réglage en hauteur des moyens S de support de la masse spongieuse 4 et donc de la trajectoire U de celle-ci.

Toutefois dans ce dernier cas, la hauteur de soulèvement de la masse 4 spongieuse à partir de l'emplacement 10 est telle que les dégoulinures de liquide, lorsqu'il y en a, en particulier lorsque le fluide est un liquide, risquent fortement de provoquer des éclaboussures importantes et l'installation sera rapidement salie. Pour éviter cet inconvénient, on peut également prévoir, à titre de variante additionnelle, un réglage en hauteur de l'emplacement 10 comme montré en tirets à la figure 1B, de manière que celui-ci puisse être positionné en relation avec la hauteur des récipients 1 et que la partie verticale de déplacement de la masse 4 spongieuse puisse être réduite à un minimum.

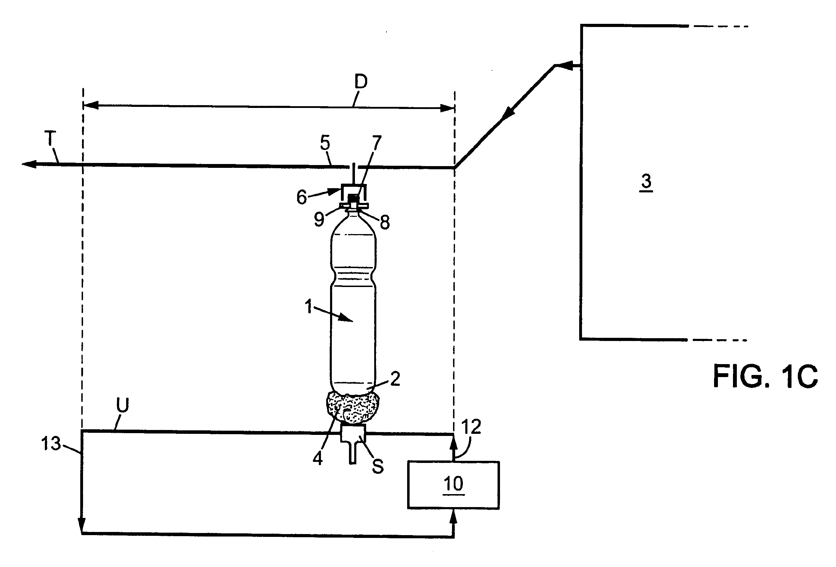

Il est également envisageable d'avoir recours à un agencement inversé illustré schématiquement à la figure 1C, selon lequel la masse spongieuse, une fois sortie de l'emplacement 10, est déplacée sur la trajectoire U à niveau sensiblement constant tandis que ce sont les récipients 1 successifs qui sont abaissés, selon une trajectoire T curviligne, pour venir au contact de la masse 4 spongieuse.

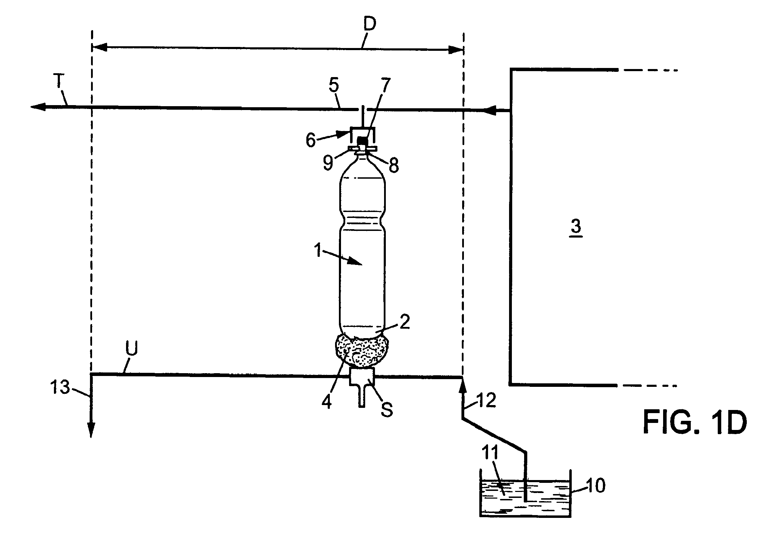

Bien que les dispositions générales qui viennent d'être exposées puissent être mises en oeuvre avec un fluide qui serait un gaz, il semble toutefois que la mise en oeuvre la plus simple et la plus efficace de l'invention consiste en ce que le fluide soit un liquide. C'est cet exemple qui est illustré aux figures 1D à 1F (qui sont analogues respectivement aux figures 1A à 1C prises en considération plus haut), dans lesquels l'emplacement 10 précité peut se présenter sous forme d'un réservoir également référencé 10 qui contient un liquide 11. Au cours du cycle, la masse 4 spongieuse est donc par exemple immergée dans le réservoir 10, puis extraite de celui-ci pour être mise en contact avec le fond 2 d'un récipient, puis finalement ramenée au réservoir 10 pour être rechargée en liquide 11.

Du fait qu'il s'agit là d'une application particulièrement intéressante de l'invention, mais étant entendu cependant que cette application n'est pas exclusive et que les dispositions de l'invention pourraient être mises en oeuvre à d'autres fins comme par exemple le réchauffement du fond des récipients ou le traitement de surface desdits fonds (modification d'aspect, peinture, etc.), il est précisé que, dans les exemples montrés aux figures 1A-1C et 1D-1F, l'invention est supposée plus spécifiquement mise en oeuvre en relation avec l'application d'un fluide, notamment d'un liquide, caloporteur approprié au refroidissement du fond chaud de récipients sortant de moulage.

Ainsi, le procédé tel qu'illustré aux figures 1A-1C et 1D-1F est supposé destiné à l'application d'un liquide sur le fond 2 d'au moins un récipient 1, notamment d'une bouteille, en matière thermoplastique, telle que du PET, qui sort d'un moule 3 de soufflage ou d'étirage-soufflage (la référence 3 désignera indifféremment un moule de soufflage ou d'étirage-soufflage à lui seul ou une installation de soufflage ou d'étirage-soufflage, notamment du type carrousel, pouvant contenir plusieurs moules). De façon pratique et économique, le fluide caloporteur peut être un liquide caloporteur qui peut être de l'eau, mais, si cela s'avère nécessaire, il peut s'agir de tout fluide, notamment de tout liquide, à coefficient calorifique approprié, maintenu à une température inférieure à celle de la matière constitutive du fond 2, en particulier aussi basse que souhaitable.

Dans le cas où le fluide est un liquide, pour faciliter la recharge en liquide de la masse 4 spongieuse et faire en sorte qu'elle absorbe une plus grande quantité de liquide neuf, il est avantageux de prévoir que, après avoir été mise hors de contact avec le fond 2 du récipient, la masse 4 spongieuse soit essorée et à nouveau imbibée de liquide frais avant d'être remise en contact avec un fond d'un autre récipient (non montré aux figures 1D-1F).

Compte tenu de la modification de température que peut subir le fluide, notamment celle provoquée par la plongée de la masse 4 spongieuse dans le liquide 11 caloporteur frais contenu dans le réservoir 10, il peut être intéressant de prévoir une régulation thermique du fluide (en particulier du liquide 11 dans le réservoir 10) de manière à maintenir ledit fluide à une température prédéterminée et à assurer une meilleure efficacité du traitement des récipients les uns à la suite des autres.

Toujours dans le souci de maintenir l'efficacité du traitement à son optimum, il peut être envisagé de régénérer le fluide, en particulier le liquide dans le réservoir 10, soit en continu soit de façon séquentielle.

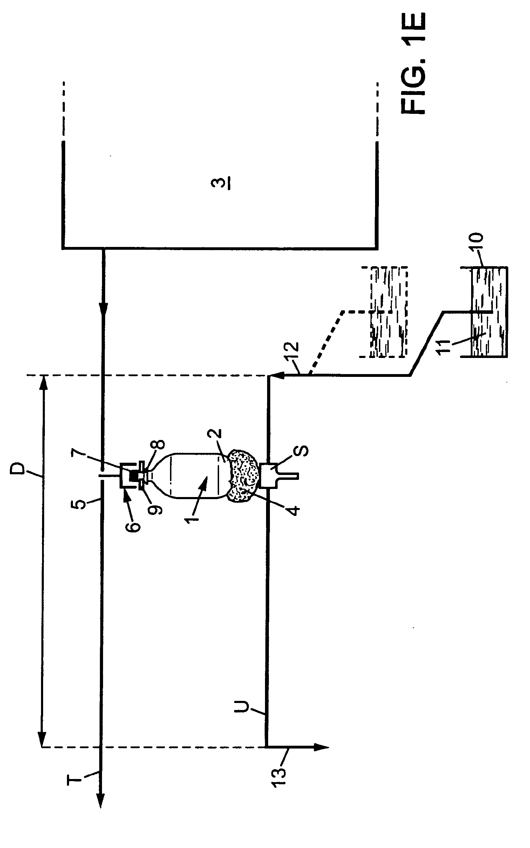

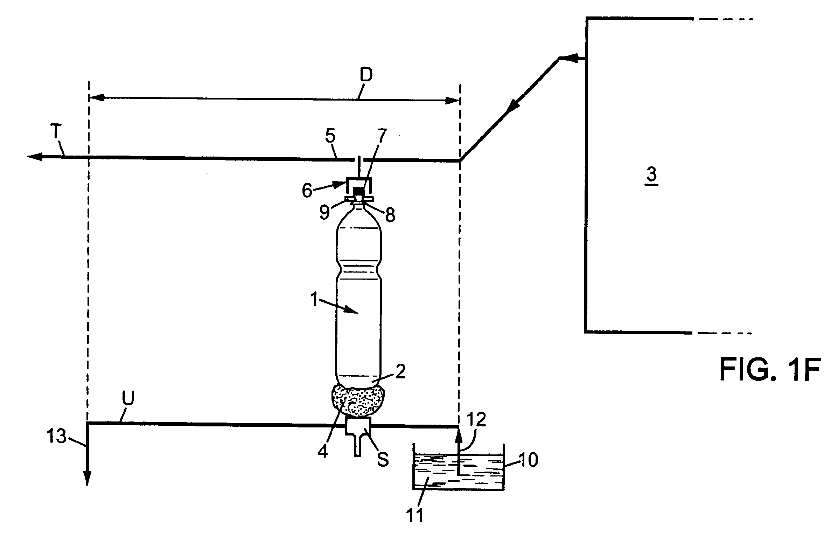

Par ailleurs, pour éviter la dispersion de liquide (condensation de fluide gazeux, fluide liquide), notamment de refroidissement, dans la partie aval de l'installation et pour que chaque récipient 1 soit immédiatement disponible pour une étape de traitement suivante (par exemple une étape d'étiquetage), il peut être souhaité qu'après le traitement (par exemple le refroidissement) du fond 2 du récipient 1 par mise en oeuvre du procédé de l'invention comme exposé ci-dessus, on amène au contact du fond 2 du récipient une autre masse spongieuse essorée afin d'éliminer dudit fond 2 au moins une partie, de préférence la plus grande partie, du liquide (par exemple de refroidissement) encore présent sur sa surface (non montré sur la figure 1).

On peut également additionner le fluide d'un produit spécifique pour l'obtention d'un effet particulier, notamment d'un produit propre à limiter le développement des germes.

Dans la suite de la description vont être décrits différents modes de réalisation pratiques des dispositions de l'invention qui vont être présentés plus particulièrement dans le cas où le fluide utilisé est un liquide, car c'est dans ce cas que l'invention semble devoir trouver ses applications les plus courantes.

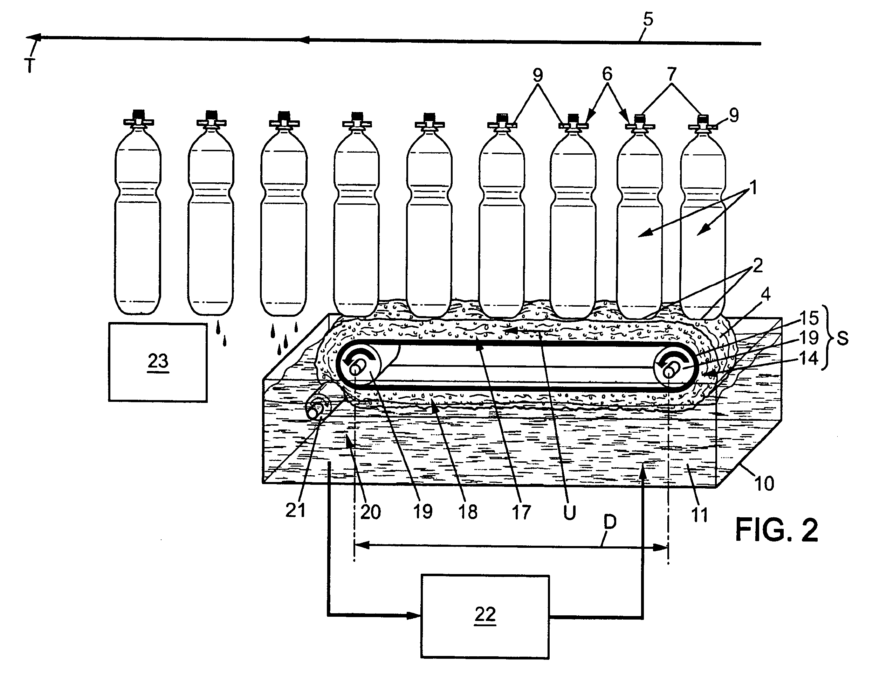

En référence avec la figure 2, on va maintenant décrire un mode de réalisation concret d'une installation de refroidissement des fonds 2 de récipients 1 qui soit propre à une mise en oeuvre industrielle du procédé de l'invention, notamment dans une installation de fabrication de récipients à cadence élevée, par application d'un liquide de refroidissement sur les fonds des récipients. Sur la figure 2, le moule de soufflage ou d'étirage-soufflage (ou l'installation de moulage par soufflage ou étirage-soufflage) 3 n'est plus représenté par mesure de simplification et les mêmes références numériques sont conservées pour désigner des organes ou parties identiques à ceux des figures 1D-1F.

Dans une telle installation, les moyens 5 transporteurs sont propres à transporter une multiplicité de récipients 1 les uns à la suite des autres sur la susdite trajectoire T prédéterminée. Bien que les moyens transporteurs puissent être de tout type, ils doivent cependant, comme expliqué plus haut, être agencés pour bloquer chaque récipient 1 à l'encontre de l'effort axial que celui-ci subit lors de la mise en contact de la masse 4 spongieuse avec son fond 2. Sur la figure 2, seules les pinces 9 précitées sont représentées schématiquement afin de conserver la clarté de lisibilité du dessin.

Dans ce mode de réalisation, on prévoit que la masse spongieuse soit conformée sous forme d'un ruban sans fin désigné dans son ensemble par la référence 14. Le ruban 14 sans fin peut par exemple comporter une bande 15 intérieure en un matériau (ou un assemblage de matériaux) suffisamment rigide pour servir de substrat propre à supporter une bande extérieure constituée en un matériau spongieux (par exemple une mousse à cellules ouvertes) qui constitue la masse 4 spongieuse proprement dite. Le matériau constitutif de ladite bande 15 intérieure doit être en même temps suffisamment souple pour pouvoir s'enrouler sur des roues de renvoi d'un dispositif d'entraînement.

Ainsi, ledit ruban 14 sans fin comporte au moins un brin 17
- qui est allongé et s'étend sensiblement rectilinéairement et sensiblement parallèlement à la trajectoire T parcourue par les fonds 2 des récipients 1 déplacés par les moyens 5 transporteurs et
- qui est positionné verticalement de manière que les fonds 2 des récipients s'impriment dans la masse spongieuse 4.

De plus, le ruban 14 sans fin est installé en liaison fonctionnelle avec le réservoir 10 de liquide 11 de refroidissement et il comporte une partie, distincte du brin 17 précité, qui défile dans le réservoir 10 rempli de liquide de refroidissement.

Bien que d'autres agencements soient possibles auxquels on pourra avoir recours si nécessaire, la solution la plus simple et la moins encombrante semble consister, comme montré à la figure 2, en ce que la masse spongieuse soit conformée sous forme d'un ruban 14 sans fin à deux brins 17, 18 sensiblement parallèles l'un à l'autre et superposés, et le ruban 14 sans fin s'enroule autour de deux roues 19 d'axes horizontaux dont l'une au moins est motrice avec une vitesse synchronisée sur celle des moyens 5 transporteurs. Le ruban 14 sans fin peut être agencé verticalement, avec les deux brins 17, 18 disposés l'un au-dessus de l'autre et c'est alors le brin 17 supérieur qui est imbibé de liquide de refroidissement tandis que c'est le brin 18 inférieur qui, au moins en partie, défile dans le réservoir 10 de liquide 11 de refroidissement.

L'entraxe des deux roues 19 représente alors sensiblement la distance D précitée.

Les deux roues 19 ainsi que la bande 15 précitée constituent ensemble les susdits moyens S de support de la masse 4 spongieuse.

L'installation comporte également des moyens 20 d'essorage disposés approximativement entre les brins 17 supérieur et 18 inférieur du ruban 14 sans fin, à l'extrémité aval de celui-ci. Comme montré à la figure 2, les moyens 20 d'essorage peuvent, d'une façon simple, comporter un (ou éventuellement plusieurs) rouleau 21 rigide disposé de manière à écraser la masse 4 spongieuse. Autrement dit, le rouleau 21 d'essorage se trouve en regard de la roue 19 située en aval et la distance entre les deux axes respectifs du rouleau 21 d'essorage et ladite roue 19 est inférieure à la somme de leurs diamètres respectifs. Le rouleau 21 d'essorage peut être disposé au-dessus du niveau du liquide 11 contenu dans le réservoir 10 de manière que l'essorage de la masse 4 spongieuse intervienne alors que celle-ci est au-dessus du niveau du liquide 11, la masse 4 spongieuse étant alors seulement essorée de son liquide réchauffé qui tombe dans le réservoir 10. Cependant, de préférence le rouleau 21 d'essorage peut être disposé sous le niveau du liquide 11 contenu dans le réservoir 10 de manière que l'essorage de la masse 4 spongieuse intervienne alors que celle-ci est déjà immergée dans le liquide 11 : non seulement la masse 4 spongieuse est débarrassée du liquide réchauffé qu'elle contenait, mais en outre, en quittant le contact des moyens d'essorage, sa reprise de forme facilite le pompage de liquide frais. C'est cette dernière disposition qui est illustrée à la figure 2.

Bien entendu, l'installation peut avantageusement être agencée avec des moyens de régulation thermique propres à maintenir le liquide 11 contenu dans le réservoir 10 à une température souhaitée, afin de compenser les apports de chaleur dus au liquide réchauffé libéré par l'essorage de la masse 4 spongieuse. Lesdits moyens de régulation thermique peuvent être conçus, comme montré à la figure 2, sous forme d'une unité 22 extérieure pompant le liquide hors du réservoir 10, puis l'y réinjectant après traitement thermique ; mais on peut aussi envisager de disposer des moyens de régulation thermique au sein de la masse de liquide 11, dans le réservoir 10.

Il est également possible de prévoir une régénération, continue ou séquentielle, du liquide 11 contenu dans le réservoir 10. Pour cela, il est possible soit d'effectuer cette régénération à l'extérieur du réservoir 10 par pompage du liquide hors du réservoir, puis réinjection du liquide régénéré dans celui-ci après traitement, soit d'effectuer cette régénération au sein du réservoir 10. Il est possible d'envisager de coupler fonctionnellement l'unité de traitement thermique et l'unité de régénération, que ce soit à l'extérieur ou à l'intérieur du réservoir 10.

Après avoir quitté la masse 4 spongieuse, la surface du fond 2 de chaque récipient 1 peut conserver plus ou moins de liquide de refroidissement, ce qui peut constituer une gêne pour une utilisation rapide du récipient (par exemple lorsque celui-ci est dirigé aussitôt sur un poste de remplissage), ou bien ces traces de liquide peuvent polluer l'environnement de l'installation en aval. Pour éviter ces inconvénients, on peut donc prévoir de façon souhaitable qu'en aval de la zone d'action de la masse spongieuse imbibée de liquide de refroidissement, l'installation comporte des moyens 23 de séchage au moins partiel des fonds 2 des récipients 1, lesquels moyens 23 de séchage sont schématisés sous forme d'un bloc à la figure 2. Les moyens 23 de séchage peuvent être de tout type approprié pour éliminer au moins en partie, et de préférence en majeure partie, la phase liquide présente sur les fonds des récipients.

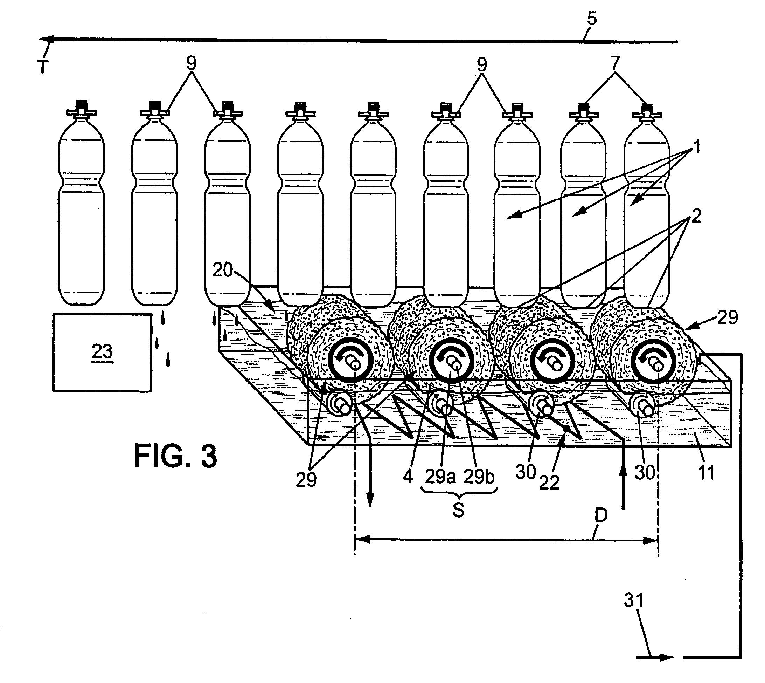

A la figure 3 est illustré un autre mode de réalisation possible d'une installation de refroidissement des fonds 2 de récipients 1, les mêmes références numériques qu'à la figure 2 étant conservées pour désigner les organes ou parties identiques.

L'installation de la figure 3 se distingue de celle de la figure 2 par le fait qu'en lieu et place de l'agencement à ruban sans fin, il est prévu un agencement formé d'une succession de rouleaux 29 de mouillage disposés côte à côte sensiblement rectilinéairement et sensiblement parallèlement à la trajectoire T parcourue par les fonds 2 des récipients 1 déplacés par les moyens 5 transporteurs, lesdits rouleaux 29 de mouillage ayant leurs axes disposés sensiblement perpendiculairement à ladite trajectoire T. Chaque rouleau 29 de mouillage peut comprendre une partie centrale rigide incorporant un moyeu 29a monté sur un axe 29b, le moyeu pouvant être fou en rotation ou, de préférence, pouvant être entraîné en rotation par des moyens d'entraînement (non montrés) par exemple agissant sur l'axe 29b. Chaque rouleau 29 de mouillage comprend également une partie externe entourant le moyeu 29a et constituée en un matériau spongieux, et c'est cette partie externe qui constitue à proprement parler la masse 4 spongieuse précitée.

Les rouleaux 29 de mouillage sont positionnés en direction verticale de manière, supérieurement, à être en contact et en appui contre les fonds 2 des récipients et de manière, inférieurement, à tremper dans le réservoir 10 rempli de liquide 11 de refroidissement frais.

Dans chaque rouleau 29, le moyeu 29a et l'axe 29b constituent les susdits moyens S de support de la masse 4 spongieuse.

A chaque rouleau 29 de mouillage est fonctionnellement associé un moyen d'essorage constitué avantageusement, comme précédemment, sous forme d'un rouleau 30 rigide d'essorage.

La distance D précitée correspond ici approximativement à l'entraxe des deux rouleaux 29 de mouillage extrêmes.

Pour le reste, l'installation de la figure 3 est agencée de la même manière que celle de la figure 2. Pour illustrer les propos précédents, la représentation a été variée
- en montrant l'unité 22 de régulation thermique (et/ou de régénération du liquide) installée au sein du réservoir 10, ladite unité pouvant être agencée de diverses manières et mettre en oeuvre des techniques diverses ;
- en montrant une alimentation 31 en liquide supplémentaire permettant de compenser les pertes.

Le mode de réalisation de la figure 2 offre l'avantage d'un contact étroit et continu de la masse spongieuse contre les fonds 2 des récipients 1 sur la totalité de la distance D ; un autre avantage réside dans le fait que les récipients ne subissent qu'un seul choc de venue en contact avec la masse spongieuse ; par contre, un inconvénient réside dans le fait que le liquide dont la masse spongieuse est imbibée se réchauffe progressivement tout au long du trajet. Le mode de réalisation de la figure 3 présente l'inconvénient d'une succession de chocs de venue en contact des récipients avec les masses spongieuses successives, ce qui nécessite un support très ferme des récipients ; par contre, ce mode de réalisation présente l'avantage que chaque fond de récipient est mis en contact avec du liquide frais à chaque rouleau, ce qui assure un refroidissement plus efficace, c'est-à-dire que la distance D peut être moindre que dans le mode de réalisation de la figure 2 soit pour l'obtention d'une température de refroidissement donnée, soit par l'obtention d'une température de refroidissement inférieure pour une distance D donnée ; au surplus, l'adaptation de la longueur de la distance D en fonction des besoins spécifiques des utilisateurs est plus aisée à obtenir en modulant en conséquence le nombre des rouleaux de mouillage.

Bien que les deux modes de réalisation qui viennent d'être décrits en référence respectivement aux figures 2 et 3 présentent l'avantage d'une structure relativement simple, ils présentent aussi cet inconvénient que l'installation possède une longueur substantielle entraînant l'occupation d'une surface au sol relativement importante, ce qui se traduit par un coût élevé d'implantation.

Par conséquent, au moins pour certaines applications, il semble devoir s'avérer plus judicieux d'avoir recours à un mode de réalisation préféré d'une installation de type rotatif capable des mêmes performances techniques, mais plus compacte et occupant une moindre surface au sol.

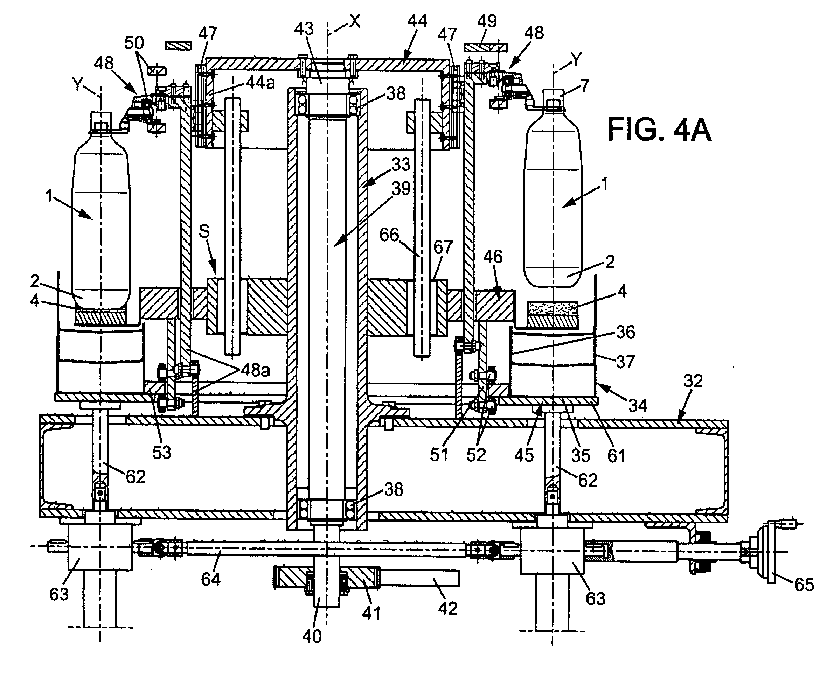

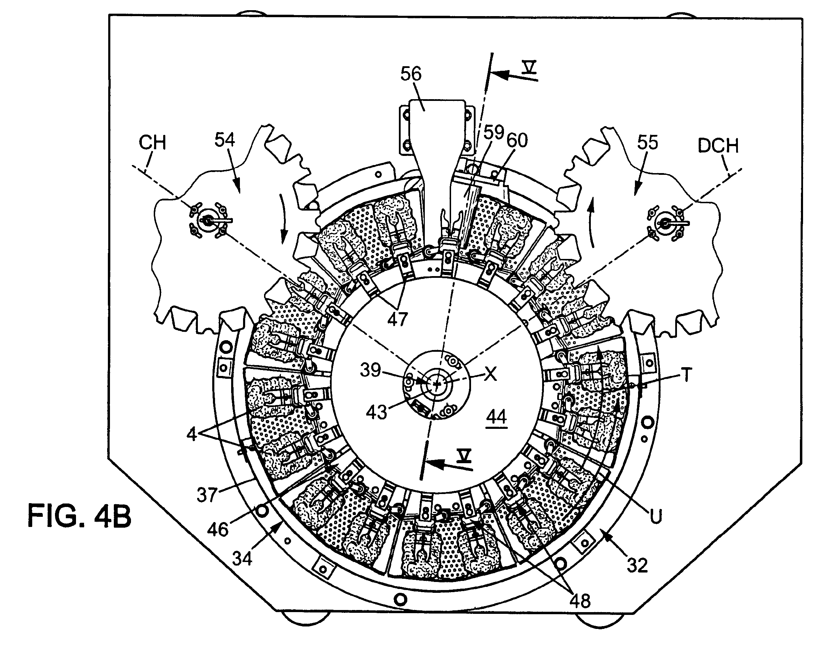

En se reportant tout d'abord aux figures 4A et 4B, une installation, du type carrousel tournant autour d'un axe X, conforme à l'invention est agencée pour une mise en oeuvre des dispositions générales exposées plus haut en regard de la figure 1F, c'est-à-dire de manière que ce soit les récipients qui soient déplacés verticalement pour être amenés au contact de masses spongieuses restant à un niveau constant. Cette installation comprend un bâti 32 en forme générale de plateau sensiblement discoïdal, sensiblement horizontal et sensiblement coaxial à l'axe X, dont est solidaire un manchon 33 tubulaire sensiblement vertical qui lui est coaxial.

Le bâti 32 supporte, par des moyens 45 de support, une goulotte ou gouttière 34 sensiblement annulaire et sensiblement coaxiale à l'axe X, qui est délimitée par un fond 35, une paroi 36 intérieure annulaire et une paroi 37 extérieure annulaire de hauteur supérieure afin d'éviter les projections de liquide vers l'extérieur de l'installation. La gouttière 32 est fixe en rotation.

Disposé coaxialement à l'intérieur du manchon 33 tubulaire tourillonne, entre des paliers 38 à roulements, un arbre 39 dont l'extrémité 40 inférieure, saillant sous le bâti 32, supporte une poulie 41 entraînée par une courroie 42 raccordée à un moyen d'entraînement approprié (non montré).

A son extrémité 43 supérieure, l'arbre 39 supporte un tambour 44 discoïdal sur la paroi 44a périphérique verticale duquel sont fixées des glissières 47 sensiblement verticales réparties avec un intervalle angulaire constant identique à celui précité des masses 4 spongieuses. Les glissières 47 supportent à coulissement des ensembles 48 de pince propres à saisir des cols 7 de récipients 1. Les ensembles 48 de pince sont déplaçables sur les glissières 47 sous l'action de moyens d'entraînement individuels (non visibles sur les figures 4A et 4B) qui peuvent être de tout type approprié connu de l'homme du métier ; de façon courante dans le domaine de la fabrication de récipients thermoplastiques, ces moyens d'entraînement individuel peuvent comprendre une came fixe, notamment disposée en partie basse de l'installation, et de galets suiveurs supportés à l'extrémité inférieure de tiges 48a verticales portées respectivement par les moyens 48 à pinces.

De son côté, la commande d'ouverture et de fermeture des pinces des ensembles 48 à pince peut également être assurée par des moyens de commande à came et galet(s) suiveur(s) comme cela est bien connu de l'homme de métier (une came 49 et des galets 50 sont visibles à la figure 4A).

Dans ces conditions, les récipients 1 défilent les uns à la suite des autres selon une trajectoire T prédéterminée qui est sensiblement en arc de cercle de rayon prédéterminé comme symbolisé par une flèche à la figure 4B.

Les moyens S de support des masses 4 spongieuses comprennent une couronne 46 sensiblement coaxiale à l'axe X qui supporte à sa périphérie un ensemble de masses 4 spongieuses réparties à intervalle angulaire constant les unes des autres. La couronne 46 est supportée à libre rotation par les moyens 45 de support de la gouttière 34. A titre d'exemple, la couronne est équipée d'une jupe ou de pattes (désigné par 51) munies de galets 52 roulants sur les deux faces opposées d'une plaque 53 circulaire de support solidaire desdits moyens 45 de support. La couronne 46 est en outre agencée pour donner passage à libre coulissement aux tiges 48a de support des galets suiveurs commandant le déplacement vertical des moyens 48 à pinces.

Ainsi, les masses 4 spongieuses sont supportées dans des positions verticales respectives fixes par rapport à la gouttière 34.

On soulignera que chaque ensemble 48 à pince est aligné verticalement avec une masse 4 spongieuse, sensiblement dans le cylindre circulaire médian de la gouttière 34, figuré par les deux axes Y droite et gauche aux figures 4A et 4B.

Dans ces conditions, les masses 4 spongieuses défilent les unes à la suite des autres selon une trajectoire U (symbolisée par une flèche à la figure 4B) sensiblement circulaire qui possède un rayon sensiblement égal audit rayon prédéterminé et qui s'étend sensiblement parallèlement et sensiblement coaxialement à ladite trajectoire T prédéterminée des récipients 1, lesdites masses 4 spongieuses étant déplacées en rotation en synchronisme avec lesdits récipients 1 sous les fonds 2 respectifs de ceux-ci.

Le fonctionnement de l'installation exposée ci-dessus est le suivant. Comme représenté à la figure 4B, une roue 54 de transfert d'entrée amène les récipients 1 jusqu'à un axe CH de chargement où ils sont saisis respectivement par les moyens 48 à pince précité, lesquels sont disposés en position haute sous l'action des susdits moyens d'entraînement individuels (non montrés) ; le fond 2 des récipients 1 sont alors situés au-dessus des masses 4 spongieuses respectives, comme visible sur la partie droite de la figure 4A.

Les moyens 48 à pince sont ensuite abaissés de telle sorte que le fond 2 des récipients 1 soit forcé au contact des masses 4 spongieuses respectives comme visible sur la partie gauche de la figure 4A. Chaque récipient est alors transporté dans cette position sur une majeure partie de la trajectoire circulaire, jusqu'à un axe de déchargement DCH où il est saisi par une roue 55 de transfert de sortie (figure 4B). Si l'on prend en compte les temps de mise en contact, puis de séparation des masses 4 spongieuses et des fonds 2 des récipients 1, la distance D de maintien en contact évoquée plus haut est un peu inférieure à la distance angulaire (considérée dans le sens de rotation) entre les axes CH et DCH.

Les dégoulinures des masses 4 spongieuses comprimées tombent dans la gouttière 34. Un agencement approprié de celle-ci (par exemple mise en oeuvre d'une pompe, ou plus simplement inclinaison de son fond 35) permet d'évacuer le liquide ainsi recueilli et de le renvoyer vers un réservoir (non montré) où il est retraité et/ou reconditionné par exemple thermiquement. Cette évacuation se situe alors dans l'intervalle angulaire entre les axes CH de chargement et DCH de déchargement précités.

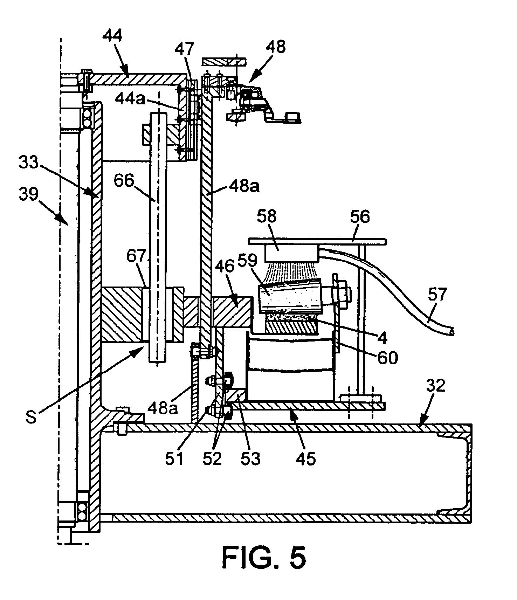

Le chargement des masses 4 spongieuses en liquide frais s'effectue également dans l'intervalle angulaire compris entre les axes DCH de déchargement et CH de chargement précités. Cependant, pour éviter le déplacement vertical des masses 4 spongieuses nécessité par leur plongée dans un réservoir comme évoqué plus haut, on peut avoir recours à l'agencement suivant illustré schématiquement à la figure 5. Dans ledit intervalle angulaire (considéré dans le sens de rotation) entre les axes CH de chargement et DCH de déchargement, on prévoit une potence 56, supportée de façon fixe par les susdits moyens 45 de support de la gouttière 34, qui s'étend radialement au-dessus de la gouttière 34. La potence 56 supporte au moins un conduit 57 d'alimentation en liquide frais, lequel conduit 57 peut être muni d'une buse 58 de pulvérisation du liquide sur les masses 4 spongieuses qui défilent en dessous de manière à recharger celles-ci.

Il peut être tout à fait avantageux de prévoir, immédiatement en amont de la potence 56, des moyens d'essorage des masses 4 spongieuses, par exemple sous forme d'un rouleau 59 situé radialement de manière à écraser les masses spongieuses et supporté à libre rotation par un flasque 60 monté sur la potence 56 ou sur la paroi 37 extérieure de la gouttière 34 comme montré aux figures 4B et 5.

Pour étendre le domaine d'utilisation de l'installation qui vient d'être exposée, il est souhaitable qu'elle puisse traiter des récipients de diverses conformations, et notamment de diverses hauteurs, étant entendu que, pour éviter des projections de liquide, les fonds des récipients 1 et les masses 4 spongieuses respectives doivent tourner en demeurant au voisinage immédiat de la gouttière 34.

A cette fin, et en notant que le niveau de référence pour le déplacement des récipients est celui des moyens 48 à pince, il est avantageux de rendre déplaçable l'ensemble de la gouttière 34 et de la couronne 46 portant les masses 4 spongieuses. De nombreuses solutions techniques sont à la disposition de l'homme du métier.

Dans un exemple simple de réalisation visible à la figure 4A, les moyens 45 de support de la gouttière 34 sont constitués sous forme d'un anneau 61 de support soutenu par deux colonnes 62 diamétralement opposées et aptes à coulisser verticalement par rapport au bâti 32. Ces colonnes 62 sont solidaires de crémaillères (non visibles) abritées dans des carters respectifs 63 fixés sous le bâti 32. Un arbre 64 d'actionnement, d'étendue diamétrale, est engagé à travers lesdits carters 63 et supporte, à l'intérieur de ceux-ci, des roues dentées respectives (non visibles) qui engrènent avec les crémaillères respectives. Une commande appropriée manuelle (par exemple manivelle 65 montrée à la figure 4A) ou motorisée permet de régler la hauteur appropriée de positionnement de la gouttière 34 et des masses 4 spongieuses en fonction de la hauteur des récipients 1.

On pourrait également avoir recours à un agencement (non montré) à came(s) hélicoïdale(s) et galet(s) interposé entre le manchon 33 tubulaire (ou toute autre partie qui en est solidaire) et la gouttière 34 (ou toute autre partie qui en est solidaire) de régler la position verticale de cette dernière par sa simple rotation soit manuelle, soit motorisée.

Pour améliorer le guidage de la couronne 46 dans son déplacement vertical lors du réglage en hauteur de la position des masses 4 spongieuses, on peut prévoir des tiges 66 de guidage d'étendue verticale fixées supérieurement au tambour 44 discoïdal et engagées dans des passages 67 de la couronne 46.

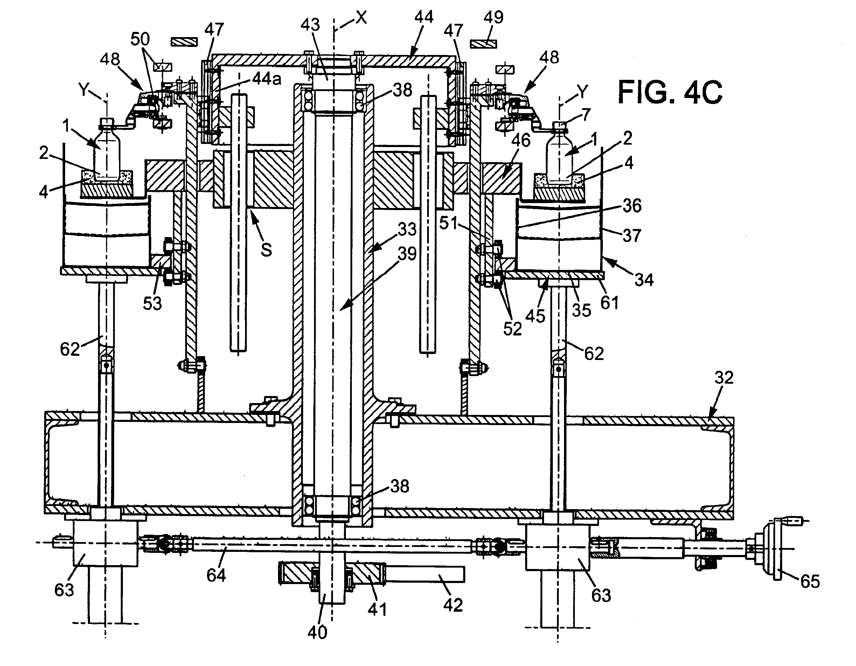

A la figure 4A, la gouttière 34 et les masses 4 spongieuses sont disposées dans une position totalement abaissée pour permettre le traitement de récipients 1 de grande hauteur. A la figure 4C qui montre la même installation (les récipients 1 montrés sur les côtés droit et gauche sont situés au même niveau, avec leurs fonds respectifs en contact avec les masses spongieuses associées), la gouttière 34 et les masses 4 spongieuses sont disposées dans une position élevée pour permettre le traitement de récipients 1 de petite hauteur.

Pour éviter de salir l'installation et rendre les récipients plus rapidement disponibles en sortie de l'installation, on peut envisager des moyens de séchage des fonds 2 des récipients prévus par exemple en aval de la potence 56 précitée, voire même prévus au droit de la roue 55 de transfert de sortie. Ces moyens de séchage (qui ne sont pas représentés) peuvent être de tout type approprié connu de l'homme du métier, par exemple sous forme d'une masse spongieuse essorée appliquée sur les fonds 2 ou un jet de gaz, notamment d'air, de séchage à température appropriée.

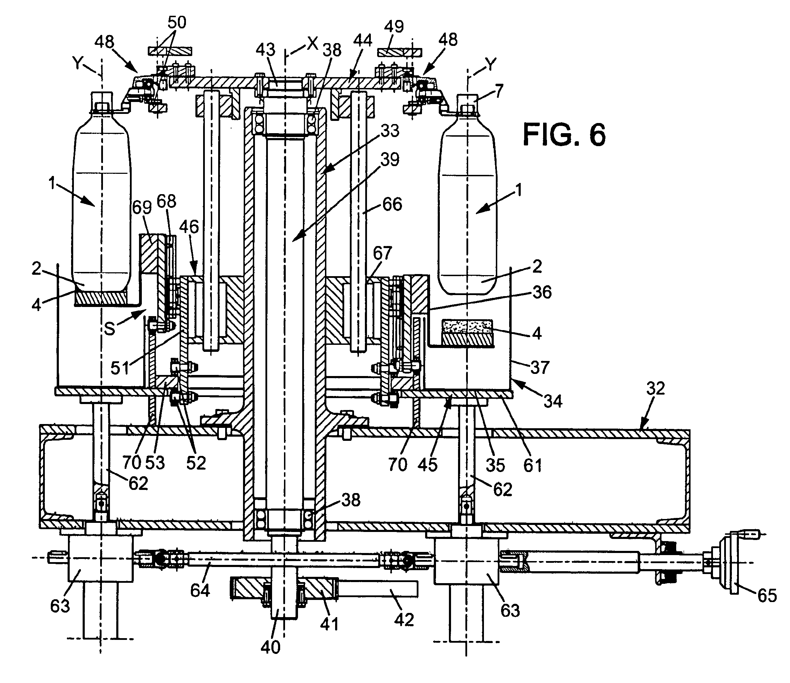

En se reportant maintenant à la figure 6, une installation, du type carrousel tournant autour d'un axe X, conforme à l'invention est agencée pour une mise en oeuvre des dispositions générales exposées plus haut en regard de la figure 1D, c'est-à-dire de manière que ce soit les masses spongieuses qui soient déplacées verticalement pour être amenées au contact de récipients qui, eux, restent à un niveau constant. L'installation illustrée à la figure 6 reprend une grande partie de la structure de l'installation des figures 4A-4C et les mêmes références numériques sont conservées pour désigner les mêmes éléments ou parties.

Du fait que les récipients 1 sont déplacés à niveau sensiblement constant, les moyens 48 à pinces sont ici fixés directement au tambour 44 discoïdal.

Pour ce qui concerne de leur côté les moyens S de support des masses 4 spongieuses, la couronne 46 est réduite à la partie centrale de la couronne 46 des figures 4A-4C dont elle conserve la structure et les fonctions : elle est équipée des galets 52 coopérant avec la plaque 53 circulaire de support et est guidée verticalement par les tiges 66 engagées dans les passages 67, comme expliqué plus haut. A sa périphérie externe, la couronne 46 supporte, par l'intermédiaire de glissières 68 verticales, des supports 69 dont sont solidaires les masses 4 spongieuses, ces supports 69 étant en nombre égal à celui des masses 4 spongieuses. Chaque support 69 est muni d'un galet suiveur propre à coopérer avec une came de guidage (non visibles sur la figure 6) pour commander le mouvement vertical des masses 4 spongieuses ; le galet suiveur peut notamment être supporté à l'extrémité inférieure d'un bras 70 de support, s'étendant vers le bas et fixé au support 69 respectif.

Sur la partie droite de la figure 6 (chargement/déchargement du récipient 1), le support 69 et la masse 4 spongieuse respective sont maintenus en position abaissée par le galet suiveur en appui sur la came de guidage ; de ce fait, la masse 4 spongieuse est écartée verticalement vers le bas du fond 2 du récipient 1 correspondant.

Sur la partie gauche de la figure 6 (application d'un liquide sur le fond 2 du récipient 1 respectif), le support 69 est maintenu en position relevée par le galet suiveur en appui sur la came de guidage ; de ce fait, la masse 4 spongieuse est elle aussi en position haute et maintenue en contact étroit avec le fond 2 du récipient 1.

Les installations tournantes qui viennent d'être présentées peuvent recevoir de nombreux compléments d'aménagement tels que ceux exposés plus haut pour les exemples d'installation à déplacement linéaire.

Bien entendu, de nombreuses variations de réalisation peuvent être introduites, en tant que de besoin, dans les installations qui viennent d'être exposées, sans sortir du cadre de l'invention définie dans les revendications qui suivent.

## Revendications

1. Procédé pour appliquer un fluide sur le fond (2) d'au moins un récipient (1) en matière thermoplastique, suivant lequel
on amène au contact du fond (2) dudit au moins un récipient (1) une masse (4) spongieuse imprégnée dudit fluide, et on maintient la masse spongieuse au contact dudit fond (2) pendant une durée prédéterminée, le récipient (1) est entraîné en déplacement sur une trajectoire (T) prédéterminée, **caractérisé en ce que**
- le récipient est entraîné en déplacement par des moyens transporteurs engagés autour d'un col du récipient,
- la masse (4) spongieuse est entraînée en déplacement à la même vitesse que le récipient (1) sur une trajectoire (U) sensiblement parallèle à celle du récipient (1) en même temps qu'elle est appliquée au contact du fond (2) du récipient (1) pendant ladite durée prédéterminée.

2. Procédé selon la revendication 1, caractérisé, pour traiter une multiplicité de récipients (1) défilant les uns à la suite des autres selon une trajectoire (T) sensiblement rectiligne,
en ce qu'on constitue la masse (4) spongieuse sous forme d'un ruban (14) sans fin comportant au moins un brin (17) qui s'étend sensiblement parallèlement à ladite trajectoire (T) des récipients (1) et qui est mis en rotation en synchronisme avec la vitesse de déplacement des récipients (1) les uns à la suite des autres,
en ce qu'on déplace les récipients (1) de manière que leurs fonds (2) respectifs soient mis en contact avec ledit brin (17) du ruban sans fin formé par la masse (4) spongieuse, et
en ce qu'en quittant le contact des fonds (2) de récipients, le ruban (14) sans fin formé par la masse (4) spongieuse est imprégné à nouveau de fluide frais.

3. Procédé selon la revendication 1, caractérisé, pour traiter une multiplicité de récipients (1) défilant les uns à la suite des autres selon une trajectoire (T) sensiblement en arc de cercle de rayon prédéterminé,
en ce qu'on prévoit une pluralité de masses (4) spongieuses situées respectivement sous lesdits récipients (1) et défilant les unes à la suite des autres selon une trajectoire (U) sensiblement circulaire qui possède un rayon sensiblement égal audit rayon prédéterminé et qui s'étend sensiblement parallèlement et sensiblement coaxialement à ladite trajectoire (T) des récipients (1), lesdites masses (4) spongieuses étant déplacées en rotation en synchronisme avec lesdits récipients (1) sous les fonds (2) respectifs de ceux-ci,
en ce que, lorsque les récipients parviennent en début de la trajectoire (T), on rapproche mutuellement les fonds (2) des récipients (1) et les masses spongieuses respectives de manière que lesdits fonds (2) soient mis en contact avec les masses (4) spongieuses respectives,
en ce que, lorsque les récipients (1) parviennent en fin de la trajectoire (T), on écarte mutuellement les fonds (2) des récipients et les masses (4) spongieuses respectives, et
en ce qu'après avoir quitté le contact des fonds (2) de récipients, les masses (4) spongieuses sont imprégnées à nouveau de fluide frais,
ladite imprégnation en fluide frais intervenant sur le parcours angulaire des masses spongieuses compris entre la fin du parcours des récipients (1) sur la trajectoire (T) et le début du parcours des récipients (1) sur la trajectoire (T).

4. Procédé selon l'une quelconque des revendications 1 à 3, **caractérisé en ce qu'**on régule (22) au moins une caractéristique, notamment la température, du fluide frais.

5. Procédé selon l'une quelconque des revendications 1 à 4, **caractérisé en ce que** le fluide est un liquide et **en ce que**, après avoir été mise hors de contact avec le fond (2) du récipient, la masse (4) spongieuse est essorée et à nouveau imbibée de liquide frais avant d'être remise en contact avec un fond (2) d'un autre récipient.

6. Procédé selon l'une quelconque des revendications 1 à 5, **caractérisé en ce que** le fluide est un liquide et **en ce qu'**on récupère le liquide s'échappant lors de l'appui de la ou des masses spongieuses contre les fonds (2) des récipients (1) et/ou lors de l'essorage et **en ce que** le liquide récupéré est, après traitement éventuel, ramené à la réserve de liquide frais.

7. Procédé selon l'une quelconque des revendications 1 à 6, **caractérisé en ce qu'**après l'application du fluide sur le fond (2) du récipient (1) et éloignement de ladite masse (4) spongieuse dudit fond (2), on sèche (23) au moins en partie la surface dudit fond (2).

8. Procédé selon l'une quelconque des revendications 1 à 7 pour modifier rapidement la température du fond (2) d'au moins un récipient (1) en matière thermoplastique,
**caractérisé en ce que** ladite masse (4) spongieuse amenée au contact du fond (2) dudit au moins un récipient (1) est imprégnée d'un fluide caloporteur que l'on maintient au contact dudit fond (2) pendant une durée prédéterminée.

9. Procédé selon l'une quelconque des revendications 1 à 7 pour refroidir rapidement le fond (2) d'au moins un récipient (1) en matière thermoplastique qui sort d'un moule (3) de soufflage ou d'étirage-soufflage, **caractérisé en ce que** ladite masse (4) spongieuse amenée au contact du fond (2) dudit au moins un récipient (1) est imprégnée d'un fluide caloporteur à température inférieure à celle dudit fond (2), que l'on maintient au contact dudit fond (2) pendant une durée prédéterminée.

10. Installation pour appliquer un fluide sur le fond (2) d'au moins un récipient (1) en matière thermoplastique, pour la mise en oeuvre du procédé selon l'une quelconque des revendications 1 à 9, ladite installation comprenant :
- au moins une masse (4) spongieuse propre à être imprégnée dudit fluide, et
- des moyens (S) de support propres à maintenir ladite masse (4) spongieuse imprégnée du fluide au contact dudit fond (2) d'au moins un récipient (1) pendant une durée prédéterminée,
ladite installation comportant des moyens (5, 44) transporteurs propres à transporter une multiplicité de récipients (1) les uns à la suite des autres sur une trajectoire (T) prédéterminée, **caractérisée en ce que**
- les moyens transporteurs sont engagés autour d'un col que comporte chacun des récipients, et **en ce que**
- des moyens d'entraînement sont fonctionnellement associés auxdits moyens (S) de support pour que ceux-ci soient déplacés en synchronisme avec les moyens (5, 44) transporteurs de manière que ladite au moins une masse (4) spongieuse reste en contact avec le fond (2) d'un récipient (1), la longueur (D) de ladite trajectoire prédéterminée et/ou la vitesse de déplacement des récipients (1) et de la masse (4) spongieuse étant établies pour procurer la susdite durée déterminée de maintien en contact de la masse (4) spongieuse avec le fond (2) du récipient (1).

11. Installation selon la revendication 10, **caractérisée**
**en ce que** le fluide est un liquide,
**en ce que** des moyens de renouvellement du liquide comprennent un réservoir (10) rempli de liquide (11) frais, en ce que les moyens (5) transporteurs sont mobiles selon une trajectoire (T) sensiblement linéaire,
**en ce que** la masse (4) spongieuse est conformée sous forme d'un ruban (14) sans fin comportant au moins un brin (17)
· qui est allongé et s'étend sensiblement rectilinéairement et sensiblement parallèlement à la trajectoire parcourue par les fonds (2) des récipients (1) déplacés par les moyens (5) transporteurs et
. qui est positionné verticalement de manière que les fonds (2) des récipients s'impriment dans la masse (4) spongieuse imbibée de liquide, et
**en ce que** ledit ruban (14) sans fin comporte une partie, distincte du susdit brin (17), conformée pour défiler dans ledit réservoir (10) rempli de liquide (11) frais.

12. Installation selon la revendication 10, **caractérisée**
**en ce que** les moyens (44) transporteurs des récipients (1) sont mobiles sensiblement circulairement et déplacent les récipients (1) selon une trajectoire (T) sensiblement en arc de cercle entre une entrée (CH) et une sortie (DCH), et en ce qu'elle comporte :
- une pluralité de masses (4) spongieuses supportées les unes à la suite des autres,
- des moyens (S) de support des masses (4) spongieuses respectives disposés sensiblement circulairement et entraînés en rotation sur une trajectoire (U) circulaire sensiblement parallèle et coaxiale à la trajectoire (T) parcourue par les fonds (2) des récipients (1),
- des moyens (47, 48a ; 68, 70) d'entraînement propres à déplacer mutuellement lesdits moyens (44) transporteurs des récipients (1) et/ou lesdits moyens (S) de support des masses (4) spongieuses de manière que les fonds (2) des récipients soient mis en contact avec les masses (4) spongieuses respectives sur au moins une partie de la susdite trajectoire (T) en arc de cercle parcourue par les récipients (1), et
- des moyens (56-58) de rechargement des masses (4) spongieuses en fluide qui sont disposés dans la partie de ladite trajectoire (T) circulaire située entre la sortie (DCH) et l'entrée (CH) des récipients (1) sur ladite trajectoire (T).

13. Installation selon la revendication 12, **caractérisée en ce que** lesdits moyens (47, 48a) d'entraînement sont propres à commander un déplacement sensiblement vertical des récipients (1) pour les abaisser en aval de ladite entrée (CH) afin d'amener leurs fonds (2) respectifs au contact des masses (4) spongieuses respectives et pour les élever en amont de ladite sortie (DCH) pour écarter leurs fonds (2) respectifs des masses (4) spongieuses respectives.

14. Installation selon la revendication 12, **caractérisée en ce que** lesdits moyens (68, 70) d'entraînement sont propres à commander un déplacement sensiblement vertical des masses (4) spongieuses pour les élever en aval de ladite entrée (CH) afin de les amener au contact des fonds (2) des récipients respectifs et pour les abaisser en amont de ladite sortie (DCH) pour les écarter des fonds (2) des récipients respectifs.

15. Installation selon l'une quelconque des revendications 12 à 14, **caractérisée en ce qu'**elle comporte une gouttière (34) sensiblement annulaire disposée sous la trajectoire (U) des masses (4) spongieuses pour récupérer des écoulements liquides susceptibles de dégoutter des masses (4) spongieuses.

16. Installation selon l'une quelconque des revendications 12 à 15, **caractérisée en ce que** le fluide est un liquide et **en ce que** l'installation comporte des moyens (20 ; 59) d'essorage propres à essorer chaque masse (4) spongieuse après sa séparation d'avec un fond (2) du récipient, lesdits moyens (10 ; 56-58) de renouvellement du liquide étant disposés en aval desdits moyens d'essorage pour recharger la masse (4) spongieuse en liquide frais.

17. Installation selon la revendication 16, **caractérisée en ce que** lesdits moyens d'essorage des masses (4) spongieuses comprennent au moins un rouleau (20, 59) contre lequel les masses (4) spongieuses en défilement sont écrasées.

18. Installation selon l'une quelconque des revendications 10 à 17, **caractérisée en ce que** lesdits moyens de rechargement des masses (4) spongieuses en fluide comprennent au moins une rampe (56-58) de projection de jets de fluide frais sur les masses (4) spongieuses.

19. Installation selon l'une quelconque des revendications 10 à 18, **caractérisée en ce qu'**elle comporte des moyens (22) de régulation de la température du fluide frais.

20. Installation selon l'une quelconque des revendications 10 à 19, **caractérisée en ce qu**'elle comporte des moyens (22 ; 31) de régénération du fluide frais.

21. Installation selon l'une quelconque des revendications 10 à 20 pour modifier rapidement la température du fond (2) d'au moins un récipient (1) en matière thermoplastique, **caractérisée en ce que** ledit fluide est un fluide caloporteur.

22. Installation selon l'une quelconque des revendications 10 à 20 pour refroidir rapidement le fond (2) chaud d'au moins un récipient (1) en matière thermoplastique qui sort d'un moule (3) de soufflage ou d'étirage-soufflage, **caractérisée en ce que** ledit fluide est un fluide caloporteur à une température inférieure à celle de la matière thermoplastique constitutive dudit fond (2).

## Claims

1. A method for applying a fluid onto the end wall (2) of at least one container (1) of thermoplastic material, wherein
a spongy mass (4) soaked with the fluid is brought into contact with the end wall (2) of said at least one container (1), and the spongy mass is held in contact with said end wall (2) for a predetermined period, the container (1) is conveyed along a predetermined path (T), **characterized in that**:
- the container is advanced by a conveying means engaged around a neck of the container,
- the spongy mass (4) is advanced at the same speed as the container (1) along a path (U) substantially parallel to that of the container (1) while simultaneously being in contact with the end wall (2) of the container (1) during said predetermined period.

2. A method according to claim 1, **characterized, in** order to process a multiplicity of containers (1) advancing one after another along a substantially rectilinear path (T), **in that**
the spongy mass (4) is in the form of an endless strip (14) comprising at least one working side (17) extending substantially parallel to said path (T) of the containers (1) and moving synchronously in rotation with the movement speed of the succession of containers (1), **in that**
the containers (1) are moved so that their respective end walls (2) are brought into contact with said working side (17) of the endless strip formed by the spongy mass (4), and **in that**
the endless strip (14) formed by the spongy mass (4) is resoaked with fresh fluid when it leaves its contact with the container end walls (2).

3. A method according to claim 1, **characterized, in** order to process a multiplicity of containers (1) advancing one after another along a path (T) that is substantially an arc of a circle of a predetermined radius,
**in that** a plurality of spongy masses (4) are provided which are respectively positioned underneath said containers (1) and advance one after another along a substantially circular path (U) having a radius substantially equal to said predetermined radius and extending substantially parallel and substantially coaxially to said path (T) of the containers (1), said spongy masses (4) being moved synchronously in rotation with said containers (1) and underneath the respective end walls (2) of said containers,
**in that**, when the containers arrive at the start of the path (T), the end walls (2) of the containers (1) and the respective spongy masses are brought closer together so that said end walls (2) are in contact with the respective spongy masses (4),
**in that**, when the containers (1) arrive at the end of the path (T), the end walls (2) of the containers and the respective spongy masses (4) are moved apart, and
**in that**, when the spongy masses (4) are no longer in contact with the end walls (2) of containers, the spongy masses (4) are resoaked with fresh fluid,
said soaking with fresh fluid occurring during the angular travel of the spongy masses between the end of the travel of the containers (1) along the path (T) and the start of the travel of the containers (1) along the path (T).

4. A method according to any one of claims 1 to 3, **characterized in that** at least one characteristic of the fresh fluid is regulated (22), particularly the temperature.

5. A method according to any one of claims 1 to 4, **characterized in that** the fluid is a liquid and **in that**, when no longer in contact with the end wall (2) of the container, the spongy mass (4) is wrung out and resoaked with fresh liquid before coming back in contact with an end wall (2) of another container.

6. A method according to any one of claims 1 to 5, **characterized in that** the fluid is a liquid and **in that** the liquid is recovered that escapes when the spongy mass or masses is pressed against the end walls (2) of the containers (1) and/or when it is wrung out, and **in that** the recovered liquid is returned to the reserve of fresh liquid, after processing if there is such processing.

7. A method according to any one of claims 1 to 6, **characterized in that**, after the fluid is applied to the end wall (2) of the container (1) and said spongy mass (4) is moved away from said end wall (2), the surface of said end wall (2) is at least partially dried (23).

8. A method according to any one of claims 1 to 7 for rapidly modifying the temperature of the end wall (2) of at least one container (1) of thermoplastic material,
**characterized in that** said spongy mass (4) brought into contact with the end wall (2) of at least one container (1) is soaked with a heat transfer fluid which is held in contact with said end wall (2) for a predetermined period.

9. A method according to any one of claims 1 to 7 for rapidly cooling the end wall (2) of at least one container (1) of thermoplastic material which is leaving a blow molding or stretch-blow molding unit (3), **characterized in that** said spongy mass (4) brought into contact with the end wall (2) of said at least one container (1) is soaked with a heat transfer fluid of a temperature lower than that of said end wall (2), and is maintained in contact with said end wall (2) for a predetermined period.

10. A system for applying a fluid onto the end wall (2) of at least one container (2) of thermoplastic material, in order to implement the method according to any one of claims 1 to 9, said system comprising:
- at least one spongy mass (4) suitable for soaking with said fluid, and
- support means (S) suitable for maintaining said fluid-soaked spongy mass (4) in contact with said end wall (2) of at least one container (1) for a predetermined period,
said system comprising conveying means (5, 44) suitable for conveying a multiplicity of containers (1) one after another along a predetermined path (T), **characterized in that**
- the conveying means is engaged around a neck that each container has, and **in that**
- a driving means is functionally associated with said support means (S) so that the latter are moved synchronously with the conveying means (5, 44) such that said at least one spongy mass (4) remains in contact with the end wall (2) of a container (1), the length (D) of said predetermined path and/or the movement speed of the containers (1) and of the spongy mass (4) being established to obtain said determined period of maintaining the spongy mass (4) in contact with the end wall (2) of the container (1).

11. A system according to claim 10, **characterized**
**in that** the fluid is a liquid,
**in that** the liquid replenishment means comprises a tank (10) filled with fresh liquid (11),
**in that** the conveying means (5) moves along a substantially linear path (T),
**in that** the spongy mass (4) is in the form of an endless strip comprising at least one working side (17)
- which is elongated and extends substantially rectilinearly and substantially parallel to the path traveled by the end walls (2) of the containers (1) conveyed by the conveying means (5), and
- which is vertically positioned so that the end walls (2) of the containers press into the spongy mass (4) soaked with liquid, and
**in that** said endless strip (14) comprises a portion, separate from said working side (17), which is arranged to advance through said tank (10) filled with fresh liquid (11).

12. A system according to claim 10, **characterized**
**in that** the conveying means (44) for the containers (1) moves in a substantially circular motion and conveys the containers (1) along a path (T) that is substantially an arc of a circle between a point of entry (LOAD) and a point of exit (UNLOAD),
and **in that** it comprises:
- a plurality of spongy masses (4) supported one after the other,
- support means (S) for the respective spongy masses (4), arranged in a substantially circular manner and rotating on a circular path (U) substantially parallel and coaxial with the path (T) traveled by the end walls (2) of the containers (1),
- driving means (47, 48a; 68, 70) suitable for mutually advancing said conveying means (44) for the containers (1) and/or said support means (S) for the spongy masses (4), such that the end walls (2) of the containers are in contact with their respective spongy masses (4) for at least a portion of said path (T) along an arc of a circle traveled by the containers (1), and
- reloading means (56-58) for reloading the spongy masses (4) with fluid, arranged in the portion of said circular path (T) located between the point of exit (UNLOAD) and the point of entry (LOAD) of the containers (1) on said path (T).

13. A system according to claim 12, **characterized in that** said driving means (47, 48a) are suitable for controlling a substantially vertical displacement of the containers (1), to lower them downstream from said point of entry (LOAD) in order to bring their end walls (2) in contact with their respective spongy masses (4), and to raise them upstream from said point of exit (UNLOAD) in order to move their end walls (2) away from their respective spongy masses (4).

14. A system according to claim 12, **characterized in that** said driving means (68, 70) are suitable for controlling a substantially vertical displacement of the spongy masses (4), to raise them downstream from said point of entry (LOAD) in order to bring them into contact with the end walls (2) of the respective containers, and to lower them upstream from said point of exit (UNLOAD) in order to move them away from the end walls (2) of the respective containers.

15. A system according to any one of claims 12 to 14, **characterized in that** it comprises a substantially annular trough (34) placed under the path (U) of the spongy masses (4), for collecting the liquid likely to drip from the spongy masses (4).

16. A system according to any one of claims 12 to 15, **characterized in that** the fluid is a liquid and **in that** the system comprises wringing means (20; 59) for wringing out each spongy mass (4) after its separation from an end wall (2) of the container, said liquid replenishment means (10; 56-58) being placed downstream from said wringing means in order to reload the spongy mass (4) with fresh liquid.

17. A system according to claim 16, **characterized in that** said wringing means for the spongy masses (4) comprise at least one roller (20, 59) against which the advancing spongy masses (4) are pressed.

18. A system according to any one of claims 10 to 17, **characterized in that** said means for reloading the spongy masses (4) with fluid comprise at least one line (56-58) that sprays jets of fresh fluid onto the spongy masses (4).

19. A system according to any one of claims 10 to 18, **characterized in that** it comprises means (22) for regulating the temperature of said fresh fluid.

20. A system according to any one of claims 10 to 19, **characterized in that** it comprises means (22; 31) for regenerating fresh fluid.

21. A system according to any one of claims 10 to 20 for rapidly modifying the temperature of the end wall (2) of at least one container (1) of thermoplastic material, **characterized in that** said fluid is a heat transfer fluid.

22. A system according to any one of claims 10 to 20 for rapidly cooling the hot end wall (2) of at least one container (1) of thermoplastic material which is leaving a blow molding or stretch-blow molding unit (3), **characterized in that** said fluid is a heat transfer fluid at a temperature lower than that of the thermoplastic material constituting said end wall (2).

## Patentansprüche

1. Verfahren zum Anwenden eines Fluids auf einen Boden (2) mindestens eines Behälters (1) aus thermoplastischem Material, demzufolge
eine schwammartige mit dem Fluid getränkte Masse (4) mit dem Boden (2) des mindestens einen Behälters (1) in Kontakt gebracht wird, die schwammartige Masse über einen festgelegten Zeitraum mit dem Boden (2) in Kontakt gehalten wird und der Behälter (1) auf einer festgelegten Trajektorie (T) bewegt wird, **dadurch gekennzeichnet, dass**
- der Behälter mit einem Transportmittel bewegt wird, das um einen Hals des Behälters wirkt,
- die schwammartige Masse (4) mit derselben Geschwindigkeit wie der Behälter (1) auf einer Trajektorie (U) bewegt wird, die im Wesentlichen parallel zu der des Behälters (1) ist und zwar zur gleichen Zeit in der sie mit dem Boden (2) des Behälters (1) während des festgelegten Zeitraums in Kontakt ist.

2. Verfahren gemäß Anspruch 1, **dadurch gekennzeichnet, dass**, um eine Vielzahl von nacheinander auf einer in etwa geradlinigen Trajektorie (T) laufende Behälter (1) zu behandeln,
die schwammartige Masse (4) als endloses Band (14) ausgebildet ist, das einen Abschnitt (17) aufweist, der sich im Wesentlichen parallel zu der Trajektorie (T) der Behälter (1) erstreckt und der in eine mit der Geschwindigkeit der Bewegung der aufeinanderfolgenden Behälter (1) gleichlaufenden Rotation versetzt wird,
die Behälter (1) so bewegt werden, dass ihre Böden (2) jeweils mit dem Abschnitt (17) des aus der schwammartigen Masse gebildeten endlosen Bands (14) in Kontakt gebracht werden und
nach der Trennung des Kontakts zu den Böden (2) der Behälter das aus der schwammartigen Masse gebildete endlose Band (14) erneut mit kühlem Fluid getränkt wird.

3. Verfahren gemäß Anspruch 1, **dadurch gekennzeichnet, dass,** um eine Vielzahl von nacheinander auf einer in etwa kreisbogenförmigen Trajektorie (T) mit festgelegtem Radius laufende Behälter (1) zu behandeln,
eine Vielzahl von jeweils unter den Behältern (1) angeordneten schwammartige Massen (4) vorgesehen sind, die aufeinanderfolgend entlang einer im Wesentlichen kreisförmigen Trajektorie (U) laufen, die in etwa den gleichen Radius wie der festgelegte Radius aufweist und die sich im Wesentlichen parallel und im Wesentlichen koaxial zu der Trajektorie (T) der Behälter (1) erstreckt, wobei die schwammartigen Massen (4) in einer gleichlaufenden Rotation mit den Behältern (1) jeweils unter deren Böden (2) bewegt werden, wenn die Behälter am Anfang der Trajektorie (T) ankommen, sich jeweils die Böden (2) der Behälter (1) und die schwammartigen Massen (4) gegenseitig so annähern, dass jeweils die Böden (2) mit den schwammartigen Massen (4) in Kontakt gebracht werden,
wenn die Behälter (1) am Ende der Trajektorie (T) ankommen, sich jeweils die Böden (2) der Behälter und die schwammartigen Massen (4) voneinander entfernen und
nach der Trennung des Kontakts zu den Böden (2) der Behälter die schwammartigen Massen (4) erneut mit kühlem Fluid getränkt werden, und
das Tränken mit dem kühlen Fluid auf dem Winkelweg der schwammartigen Massen zwischen dem Ende des Wegs der Behälter (1) auf der Trajektorie (T) und dem Anfang des Wegs der Behälter (1) auf der Trajektorie (T) stattfindet.

4. Verfahren gemäß einem der Ansprüche 1 bis 3, **dadurch gekennzeichnet, dass** mindestens eine Eigenschaft des kühlen Fluids, insbesondere die Temperatur, geregelt wird (22).

5. Verfahren gemäß einem der Ansprüche 1 bis 4, **dadurch gekennzeichnet, dass** das Fluid eine Flüssigkeit ist und dadurch dass nach dem Lösen des Kontakts mit dem Boden (2) des Behälters, die schwammartige Masse (4) ausgewrungen wird und erneut mit kühler Flüssigkeit getränkt wird, bevor sie wieder mit einem Boden (2) eines anderen Behälters in Kontakt gebracht wird.

6. Verfahren gemäß einem der Ansprüche 1 bis 5, **dadurch gekennzeichnet, dass** das Fluid eine Flüssigkeit ist und dass die Flüssigkeit wiedergewonnen wird, die während des Anliegens an den Böden (2) der Behälter (1) entronnen ist und/oder während des Auswringens und dadurch, dass die wiedergewonnene Flüssigkeit möglicherweise nach einer Behandlung zu dem Vorrat an kühler Flüssigkeit zurückgebracht wird.

7. Verfahren gemäß einem der Ansprüche 1 bis 6, **dadurch gekennzeichnet, dass** nach der Anwendung des Fluids auf den Boden (2) des Behälters (1) und Entfernen der schwammartigen Masse (4) von dem Boden (2), zumindest ein Abschnitt der Oberfläche des Bodens (2) getrocknet wird (23).

8. Verfahren gemäß einem der Ansprüche 1 bis 7 zur schnellen Veränderung der Temperatur des Bodens (2) des mindestens einen Behälters (1) aus thermoplastischem Material,
**dadurch gekennzeichnet, dass** die mit dem Boden (2) des mindestens einen Behälters (1) in Kontakt gebrachte schwammartige Masse (4) mit einem wärmeübertragenden Fluid getränkt ist, das während eines festgelegten Zeitraums mit dem Boden (2) in Kontakt gehalten wird.

9. Verfahren gemäß einem der Ansprüche 1 bis 7 zum schnellen Kühlen des Bodens (2) mindestens eines Behälters (1) aus thermoplastischem Material, der eine Blas- oder Streckblasform (3) verlassen hat,
**dadurch gekennzeichnet, dass** die mit dem Boden (2) mindestens eines Behälters (1) in Kontakt gebrachte schwammartige Masse (4) mit einem wärmeübertragenden Fluid getränkt ist, das eine niedrigere Temperatur als die des Bodens (2) aufweist und während eines festgelegten Zeitraums mit dem Boden (2) in Kontakt gehalten wird.

10. Vorrichtung um ein Fluid auf den Boden (2) mindestens eines Behälters (1) aus thermoplastischem Material anzuwenden und um das Verfahren gemäß einem der Ansprüche 1 bis 9 umzusetzen, wobei die Vorrichtung aufweist:
- mindestens eine schwammartige Masse (4), die geeignet ist, mit dem Fluid getränkt zu werden und
- ein Unterstützungsmittel (S), das geeignet ist, die mit dem Fluid getränkte schwammartige Masse (4) mit dem Boden (2) mindestens eines Behälters (1) während eines festgelegten Zeitraums in Kontakt zu halten,
und die Vorrichtung ein Transportmittel (5, 44) aufweist, dass geeignet ist, eine Vielzahl aufeinanderfolgender Behälter (1) auf einer festgelegten Trajektorie (T) zu transportieren, **dadurch gekennzeichnet, dass**
- das Transportmittel um einen Hals wirkt, den jeder der Behälter aufweist und dadurch, dass
- ein Antriebsmittel funktionell mit dem Unterstützungsmittel (S) zusammenwirkt, sodass es so im Gleichlauf mit dem Transportmittel (5, 44) bewegt wird, dass die schwammartige Masse (4) mit dem Boden (2) eines Behälters (1) in Kontakt bleibt, wobei die Länge (D) der festgelegten Trajektorie und/oder die Bewegungsgeschwindigkeit der Behälter (1) und der schwammartigen Masse (4) eingerichtet ist, um in dem festgelegten Zeitraum den Kontakt der schwammartigen Masse (4) mit dem Boden (2) des Behälters (1) zu halten.

11. Vorrichtung gemäß Anspruch 10, **dadurch gekennzeichnet, dass** das Fluid eine Flüssigkeit ist,
dass ein Mittel zur Erneuerung der Flüssigkeit ein mit kühler Flüssigkeit (11) gefülltes Reservoir (10) aufweist,
dass das Transportmittel (5) gemäß einer im Wesentlichen linearen Trajektorie (T) bewegbar ist,
dass die schwammartige Masse (4) in der Form eines endlosen Bands (14) mit einem Abschnitt (17) ausgebildet ist,
• der länglich ist und sich im Wesentlichen geradlinig und im Wesentlichen parallel zu der durch die von dem Transportmittel (S) bewegten Böden (2) der Behälter (1) durchlaufenden Trajektorie erstreckt und
• der so vertikal angeordnet ist, dass die Böden (2) der Behälter sich in die flüssigkeitsgetränkte schwammartige Masse (4) eindrücken und
dass das endlose Band (14) einen von dem Abschnitt (17) unterschiedlichen Bereich aufweist, der zum Durchlaufen des mit kühler Flüssigkeit (11) aufgefüllten Reservoirs (10) ausgebildet ist.

12. Vorrichtung gemäß Anspruch 10, **dadurch gekennzeichnet, dass** das Transportmittel (44) der Behälter (1) im Wesentlichen kreisförmig bewegbar ist und die Behälter (1) gemäß einer im Wesentlichen bogenkreisförmigen Trajektorie (T) zwischen einem Eingang (CH) und einem Ausgang (DCH) bewegt und dadurch, dass sie aufweist:
- eine Vielzahl von aufeinanderfolgenden unterstützten schwammartigen Massen (4),
- Unterstützungsmittel (S) für die schwammartigen Massen (4), die jeweils im Wesentlichen kreisförmig angeordnet sind und auf einer kreisförmigen Trajektorie (U), die im Wesentlichen parallel und koaxial zu der von den Böden (2) der Behälter (1) durchlaufenden Trajektorie (T) ist, mit einer Rotationsbewegung angetrieben werden,
- ein Antriebsmittel (47, 48a; 68, 70), das geeignet ist, das Transportmittel (44) der Behälter (1) und/oder die Unterstützungsmittel (S) der schwammartigen Massen (4) so zueinander zu bewegen, dass die Böden (2) der Behälter jeweils mit den schwammartigen Massen (4) in zumindest einem Bereich der kreisbogenförmigen von den Behältern (1) durchlaufenden Trajektorie (T) in Kontakt gebracht werden und
- ein Mittel (56-58) zum Wiederauffüllen der schwammartigen Massen (4) mit Fluid, das in dem Bereich der kreisförmigen Trajektorie (T) platziert ist, der auf der Trajektorie (T) zwischen dem Ausgang (DCH) und dem Eingang (CH) der Behälter (1) angeordnet ist.

13. Vorrichtung gemäß Anspruch 12, **dadurch gekennzeichnet, dass** das Antriebsmittel (47, 48a) geeignet ist, eine im Wesentlichen vertikale Bewegung der Behälter (1) zu steuern, um sie abwärts zu der Bewegungsrichtung relativ zu dem Eingang (CH) abzusenken und ihre Böden (2) jeweils mit der jeweiligen schwammartigen Masse (4) in Kontakt zu bringen und sie aufwärts zu der Bewegungsrichtung relativ zu dem Ausgang (DCH) anzuheben, um jeweils ihre Böden (2) von den jeweiligen schwammartigen Massen (4) zu entfernen.

14. Vorrichtung gemäß Anspruch 12, **dadurch gekennzeichnet, dass** das Antriebsmittel (68, 70) geeignet ist, eine im Wesentlichen vertikale Bewegung der schwammartigen Massen (4) zu steuern, um sie abwärts zu der Bewegungsrichtung relativ zu dem Eingang (CH) anzuheben und sie jeweils mit den Böden (2) der Behälter in Kontakt zu bringen und sie aufwärts zu der Bewegungsrichtung relativ zu dem Ausgang (DCH) abzusenken, um sie jeweils von den Böden (2) der Behälter zu entfernen.

15. Vorrichtung gemäß einem der Ansprüche 12 bis 14, **dadurch gekennzeichnet, dass** sie eine in etwa ringförmige Rinne (34) aufweist, die unter der Trajektorie (U) der schwammartigen Massen (4) angeordnet ist, um abfließende Flüssigkeit wiederzugewinnen, die von den schwammartigen Massen (4) abtropft.

16. Vorrichtung gemäß einem der Ansprüche 12 bis 15, **dadurch gekennzeichnet, dass** das Fluid eine Flüssigkeit ist und dadurch dass die Vorrichtung ein Auswringmittel (20; 59) aufweist, das geeignet ist, jede schwammartige Masse (4) nach ihrer Trennung von einem Boden (2) eines Behälters auszuwringen, wobei das Mittel (10; 56-58) zum Erneuern der Flüssigkeit abwärts zu der Bewegungsrichtung des Auswringmittels angeordnet ist, um die schwammartige Masse (4) mit kühler Flüssigkeit wiederaufzufüllen.

17. Vorrichtung gemäß Anspruch 16, **dadurch gekennzeichnet, dass** das Auswringmittel für die schwammartigen Massen (4) mindesten eine Rolle (20, 59) aufweist, gegen das die schwammartigen Massen (4) beim Vorbeilaufen ausgewrungen werden.

18. Vorrichtung gemäß einem der Ansprüche 10 bis 17, **dadurch gekennzeichnet, dass** das Mittel zum Wiederauffüllen der schwammartigen Massen (4) mit Fluid mindestens eine Spritzrampe (56-58) mit Strahlen kühlen Fluids auf die schwammartigen Massen (4) aufweist.

19. Vorrichtung gemäß einem der Ansprüche 10 bis 18, **dadurch gekennzeichnet, dass** sie ein Regelungsmittel (22) für die Temperatur des kühlen Fluids aufweist.

20. Vorrichtung gemäß einem der Ansprüche 10 bis 19, **dadurch gekennzeichnet, dass** sie ein Regenerationsmittel (22; 31) für das kühle Fluid aufweist.

21. Vorrichtung gemäß einem der Ansprüche 10 bis 20 zur schnellen Veränderung der Temperatur des Bodens (2) mindestens eines Behälters (1) aus thermoplastischem Material, **dadurch gekennzeichnet, dass** das Fluid ein wärmeübertragendes Fluid ist.

22. Vorrichtung gemäß einem der Ansprüche 10 bis 20 zum schnellen Abkühlen des aufgeheizten Bodens (2) mindestens eines Behälters (1) aus thermoplastischem Material, der eine Blas- oder Streckblasform (3) verlässt, **dadurch gekennzeichnet, dass** das Fluid ein wärmeübertragendes Fluid ist, das eine Temperatur unter der des den Boden (2) bildenden thermoplastischen Materials aufweist.
